# EUROPEAN PATENT APPLICATION

(11) **EP 4 109 980 A1**
(43) Date of publication of application: **28.12.2022**
(21) Application number: 21766875.5
(22) Date of filing: 11.03.2021
(51) Int. Cl.: H04W 52/02, H04L 5/00

(54) **POWER SAVING METHOD AND APPARATUS APPLIED TO MULTILINK COMMUNICATION**

(30) Priority: 11.03.2020 CN 202010168105
(71) Applicant: Huawei Technologies Co., Ltd., Shenzhen, Guangdong 518129, (CN)
(72) Inventor: GAN, Ming, Shenzhen, Guangdong 518129 (CN); GUO, Yuchen, Shenzhen, Guangdong 518129 (CN); LIANG, Dandan, Shenzhen, Guangdong 518129 (CN); YU, Jian, Shenzhen, Guangdong 518129 (CN); LI, Yunbo, Shenzhen, Guangdong 518129 (CN); LI, Yiqing, Shenzhen, Guangdong 518129 (CN)
(74) Representative: Maiwald GmbH
(86) International application number: PCT/CN2021/080237
(87) International publication number: WO 2021/180177

(57) **Abstract**

Embodiments of this application disclose a power saving method for multi-link communication and an apparatus, to reduce power consumption of a multi-link device. A specific solution is as follows: A first multi-link device sends a notification frame to a second device on one of a plurality of links, and the notification frame indicates whether a plurality of stations in the first multi-link device are in an awake state. Whether one or more stations included in the first multi-link device are in an awake state is reported on one link of the multi-link device, so that a plurality of other STAs operating on the plurality of links do not report their awake states. This can reduce power consumption of the multi-link device, reduce signaling overheads, and improve transmission efficiency.

## Description

This application claims priority to Chinese Patent Application No. 202010168105.3, filed with the China National Intellectual Property Administration on March 11, 2020 and entitled "POWER SAVING METHOD FOR MULTI-LINK COMMUNICATION AND APPARATUS", which is incorporated herein by reference in its entirety.

### TECHNICAL FIELD

Embodiments of this application relate to the field of communications technologies, and in particular, to a power saving method for multi-link communication and an apparatus.

### BACKGROUND

To significantly increase a service transmission rate of a WLAN system, the Institute of Electrical and Electronics Engineers (IEEE, Institute of Electrical and Electronics Engineers) 802.11ax standard further adopts an orthogonal frequency division multiple access (OFDMA, Orthogonal Frequency Division Multiplexing) technology based on an existing orthogonal frequency division multiplexing (OFDM, Orthogonal Frequency Division Multiple Access) technology. The OFDMA technology supports a plurality of nodes to send and receive data simultaneously. This achieves multi-station diversity gains. During formulation of 802.11ax in 2017, the Federal Communications Commission (FCC, Federal Communications Commission) released a new free frequency band 5925-7125 MHz, where the frequency band is referred to as 6 GHz below. Therefore, the 802.11ax standard operating group extends an operating range of 802.11ax devices from 2.4 GHz and 5 GHz to 2.4 GHz, 5 GHz, and 6 GHz in the 802.11ax project authorization requests (PAR, Project Authorization Requests).

IEEE 802.11 next-generation Wi-Fi protocol (EHT, extremely high throughput)-compliant devices need to be forward compatible. Therefore, these devices also support operating spectra of the 802.11ax-compliant devices, that is, supporting 2.4-GHz, 5-GHz, and 6-GHz frequency bands. Channel division is performed based on the free 6-GHz frequency band that is released recently, and a supported bandwidth may exceed a maximum bandwidth of 160 MHz supported in the 5-GHz frequency band, for example, 320 MHz. In addition to supporting an ultra-high bandwidth, IEEE 802.11 next-generation Wi-Fi-extremely high throughput can also support cooperation of a plurality of frequency bands (2.4 GHz, 5 GHz, and 6 GHz) and more streams, for example, increasing a quantity of streams to 16, to increase a peak throughput. On a same frequency band, a peak throughput may further be increased in a manner such as cooperation of a plurality of channels, to reduce a service transmission delay. In the following, multi-frequency band or multi-channel is collectively referred to as multi-link.

Although the multi-link is configured for 802.11ax and earlier Wi-Fi that has a same operating frequency band, generally different BSSs (basic service set, Basic Service Set) are established for each multi-link, and at one moment, communication with a station in a BSS to which the link belongs is performed on only one link.

In the next-generation Wi-Fi extremely high throughput (EHT, extremely high throughput) protocol of IEEE 802.11, in addition to using a continuous ultra-high bandwidth of the new 6 GHz frequency band, discontinuous multi-links may also be aggregated by using a multi-link cooperation technology to form an ultra-high bandwidth. In addition to aggregating and forming a higher bandwidth, the multi-link cooperation technology may further be used to simultaneously send a data packet to a same station.

It is clear that a multi-link device uses a plurality of links for concurrent communication, to greatly increase a transmission rate. However, because the plurality of links need to operate simultaneously, more power needs to be consumed, and power consumption overheads are higher. Therefore, how to reduce power of the multi-link device is crucial.

### SUMMARY

Embodiments of this application provide a power saving method for multi-link communication and an apparatus, to reduce power consumption of a multi-link station.

To achieve the foregoing objective, the following technical solutions are used in embodiments of this application.

According to a first aspect, a power saving method for multi-link communication is provided, and is applied in a first multi-link device. A station in the first multi-link device operates on one of a plurality of links, and one station in the first multi-link device sends a notification frame to a second device on one link, where the notification frame indicates whether a plurality of stations in the first multi-link device are in an awake state. It may be understood that, in this solution, that one or more stations included in a multi-link device are in an awake state is reported on one link of the multi-link device, so that a plurality of other STAs operating on a plurality of links do not report their awake states one by one. This can reduce power consumption of the multi-link device and improve transmission efficiency.

According to a second aspect, another power saving method for multi-link communication is provided. The method includes: A second device receives, on one link, a notification frame sent by a station in a first multi-link device, where the notification frame indicates whether a plurality of stations in the first multi-link device are in an awake state, and one station in the first multi-link device operates on one link; and the second device determines a station in an awake state in the first multi-link device based on the notification frame.

According to a third aspect, a buffered traffic notification method is provided. The method includes: A second device generates a media access control layer (MAC) frame, the MAC frame includes a link identifier bitmap and a more data (More data) bit, the link identifier bitmap includes a plurality of bits, one bit corresponds to one station on one of a plurality of links, the more data bit includes one bit, and a combination of the link identifier bitmap and the more data bit indicates whether a station on a link corresponding to the link identifier bitmap has buffered traffic to be received; and sends the MAC frame.

According to a fourth aspect, a buffered traffic notification method is provided. The method includes: A first device receives a media access control layer (medium access control layer, MAC) frame, where the MAC frame includes a link identifier bitmap and a more data (More data) bit, the link identifier bitmap includes a plurality of bits, one bit corresponds to one station on one of a plurality of links, the more data bit includes one bit, and a combination of the link identifier bitmap and the more data bit indicates whether a station on a link corresponding to the link identifier bitmap has buffered traffic to be received; and the first device determines, based on the link identifier bitmap and the more data bit, which stations in the first device have buffered traffic to be received.

According to a fifth aspect, a communication apparatus for a first multi-link device is provided, including: a processing unit, configured to generate a notification frame, where the notification frame indicates whether a plurality of stations in the first multi-link device are in an awake state, and one station in the first multi-link device operates on one link; and a transceiver unit, configured to send the notification frame to a second device on one link.

According to a sixth aspect, a communication apparatus applied in a second device is provided, including:
a transceiver unit, configured to receive, on one link, a notification frame sent by a station in a first multi-link device, where the notification frame indicates whether a plurality of stations in the first multi-link device are in an awake state, and one station in the first multi-link device operates on one link; and a processing unit, configured to determine a station in an awake state in the first multi-link device based on the notification frame.

According to a seventh aspect, a communication apparatus applied in a first device is provided, including: a transceiver unit, configured to receive a media access control layer (medium access control layer, MAC) frame, where the MAC frame includes a link identifier bitmap and a more data (More data) bit, the link identifier bitmap includes a plurality of bits, one bit corresponds to one station on one of a plurality of links, the more data bit includes one bit, and a combination of the link identifier bitmap and the more data bit indicates whether a station on a link corresponding to the link identifier bitmap has buffered traffic to be received; and a processing unit, configured to determine, based on the link identifier bitmap and the more data bit, which stations in the first device have buffered traffic to be received.

According to an eighth aspect, a communication apparatus applied in a second device is provided, including: a processing unit, configured to generate a media access control layer (MAC) frame, where the MAC frame includes a link identifier bitmap and a more data (More data) bit, the link identifier bitmap includes a plurality of bits, one bit corresponds to one station on one of a plurality of links, the more data bit includes one bit, and a combination of the link identifier bitmap and the more data bit indicates whether a station on a link corresponding to the link identifier bitmap has buffered traffic to be received; and a transceiver unit, configured to send the MAC frame.

The communication apparatus in the fifth aspect to the eighth aspect may be a chip, the processing unit may be a processing circuit of the chip, the transceiver unit may be an input/output interface circuit, the processing circuit may be configured to process signaling or data information provided by the input/output interface circuit, and the input/output interface circuit may be configured to input/output data or signaling information for the chip.

According to a ninth aspect of the embodiments of this application, a computer-readable storage medium is provided. The computer-readable storage medium stores computer program code. When the computer program code is run on a processor, the processor is enabled to perform the method in any one of the foregoing aspects.

According to a tenth aspect of the embodiments of this application, a computer program product is provided. The program product stores computer software instructions executed by the foregoing processor, and the computer software instructions include a program performing solutions in the foregoing aspects.

According to an eleventh aspect of the embodiments of this application, a communication apparatus is provided. The apparatus includes a processor, and may further include a transceiver and a memory. The transceiver is configured to send and receive information, or configured to communicate with another network element. The memory is configured to store computer-executable instructions. The processor is configured to execute the computer-executable instructions, to support the communication apparatus to perform the method in any one of the foregoing aspects.

According to a twelfth aspect of the embodiments of this application, a communication apparatus is provided. The apparatus may exist in a product form of a chip. A structure of the apparatus includes a processor, and may further include a memory. The memory is configured to be coupled to the processor to store program instructions and data that are necessary for the apparatus. The processor is configured to execute the program instructions stored in the memory, to support the communication apparatus to perform the method in any one of the foregoing aspects.

According to a thirteenth aspect of the embodiments of this application, a communication apparatus is provided. The apparatus may exist in a product form of a chip. A structure of the apparatus includes a processor and an interface circuit. The processor is configured to communicate with another apparatus through a receiving circuit, to enable the apparatus to perform the method in any one of the foregoing aspects.

### BRIEF DESCRIPTION OF DRAWINGS

FIG. 1 is a schematic diagram of a structure of a communication system according to an embodiment of this application;
FIG. 2(a) is a schematic diagram of a structure of a multi-link device according to an embodiment of this application;
FIG. 2(b) is a schematic diagram of a structure of another multi-link device according to an embodiment of this application;
FIG. 3(a) is a schematic diagram of multi-link communication according to an embodiment of this application;
FIG. 3(b) is another schematic diagram of multi-link communication according to an embodiment of this application;
FIG. 4 is a schematic diagram of interaction of a power saving method for multi-link communication according to an embodiment of this application;
FIG. 5 is a schematic diagram of a frame structure of a PS-Poll frame according to an embodiment of this application;
FIG. 6 is a schematic diagram of communication between multi-link devices according to an embodiment of this application;
FIG. 7 is a schematic diagram of interaction of a buffered traffic notification method according to an embodiment of this application;
FIG. 8 is another schematic diagram of communication between multi-link devices according to an embodiment of this application;
FIG. 9 is a schematic diagram of interaction of another power saving method for multi-link communication according to an embodiment of this application;
FIG. 10 is a schematic composition diagram of a communication apparatus according to an embodiment of this application; and
FIG. 11 is a schematic composition diagram of another communication apparatus according to an embodiment of this application.

### DESCRIPTION OF EMBODIMENTS

The following describes technical solutions in embodiments of this application with reference to the accompanying drawings in the embodiments of this application.

The embodiments of this application provide a communication method applied in a wireless communication system, to reduce power consumption of a multi-link device. The wireless communication system may be a wireless local area network (Wireless local area network) or a cellular network. The method may be implemented by a communication device in the wireless communication system or a chip or a processor in the communication device. The communication device may be a wireless communication device that supports concurrent transmission performed on a plurality of links. For example, the communication device is referred to as a multi-link device (Multi-link device) or a multi-band device (multi-band device). Compared with a device that supports only single-link transmission, the multi-link device has higher transmission efficiency and a higher throughput.

The multi-link device includes one or more affiliated stations STAs (affiliated STA). The affiliated STA is a logical station and may operate on one link. The affiliated station may be an access point (Access Point, AP) or a non-access point station (non-Access Point Station, non-AP STA). For ease of description, in this application, a multi-link device whose affiliated station is an AP may be referred to as a multi-link AP, a multi-link AP device, or an AP multi-link device (AP multi-link device). A multi-link device whose affiliated station is a non-AP STA may be referred to as a multi-link STA, a multi-link STA device, or a STA multi-link device (STA multi-link device). For ease of description, that "the multi-link device includes an affiliated STA" is also briefly described as that "the multi-link device includes a STA" in the embodiments of this application.

It should be noted that the multi-link device includes a plurality of logical stations, and each logical station operates on one link, but the plurality of logical stations are allowed to operate on a same link. A link identifier mentioned below represents one station operating on one link. In other words, if there is more than one station on one link, more than one link identifier is required to represent the more than one station. A link mentioned below sometimes also represents a station operating on the link.

When data is to be transmitted between the multi-link AP device and the multi-link STA, a link identifier may identify one link or a station on one link. Before communication, the multi-link AP device and the multi-link STA device may first negotiate or communicate with each other about a correspondence between a link identifier and one link or a station on one link. Therefore, during data transmission, a link identifier is carried without a need to transmit a large amount of signaling information to indicate a link or a station on a link. This reduces signaling overheads and improves transmission efficiency.

In an example, when the multi-link AP device establishes a BSS, a management frame, for example, a beacon frame, sent by the multi-link AP device may carry an element including a plurality of link identification information fields. Each link identification information field may indicate a correspondence between one link identifier and a station operating on one link. Each link identification information field includes a link identifier, and further includes one or more of a MAC address, an operation class, and a channel number, where one or more of the MAC address, the operation class, and the channel number may indicate one link. In another example, in a multi-link association establishment process, the multi-link AP device and the multi-link station device negotiate a plurality of link identification information fields. In subsequent communication, the multi-link AP device or the multi-link station device may use the link identifier to represent a station in the multi-link device, and the link identifier may further represent one or more attributes of a MAC address of the station, an operating operation class, and a channel number. The MAC address may also be replaced with an association identifier of the multi-link AP device associated with the station.

If a plurality of stations operate on one link, the link identifier (which is a numeric ID) not only represents an operation class and a channel number corresponding to the link, but also represents an identifier of a station operating on the link, for example, a MAC address or an AID of the station.

The multi-link device may implement wireless communication according to 802.11 family of standards. For example, a station complying with an extremely high throughput (EHT), or a station complying with 802.11be or compatible with a station supporting 802.11be implements communication with another device. Certainly, the another device may be a multi-link device, or may not be a multi-link device.

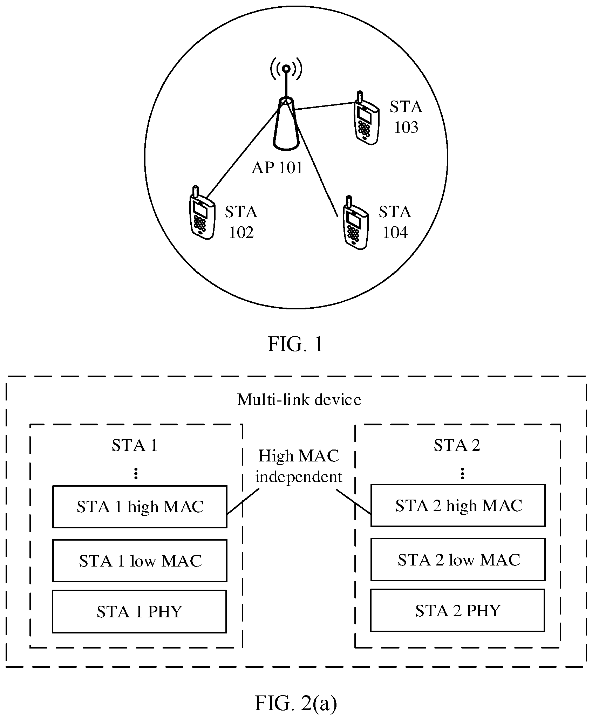

FIG. 1 uses a wireless local area network as an example to describe an application scenario according to an embodiment of this application. The application scenario shown in FIG. 1 includes a multi-link AP device 101 and a multi-link STA device 102. The multi-link AP device is a multi-link device that provides a service for the multi-link STA device. The multi-link STA device may communicate with the multi-link AP device over a plurality of links. This can improve a throughput. Certainly, the wireless local area network may further include other devices, for example, a multi-link STA 103 and a single-link STA 104. Quantities of multi-link APs and multi-link STAs in FIG. 1 are merely examples.

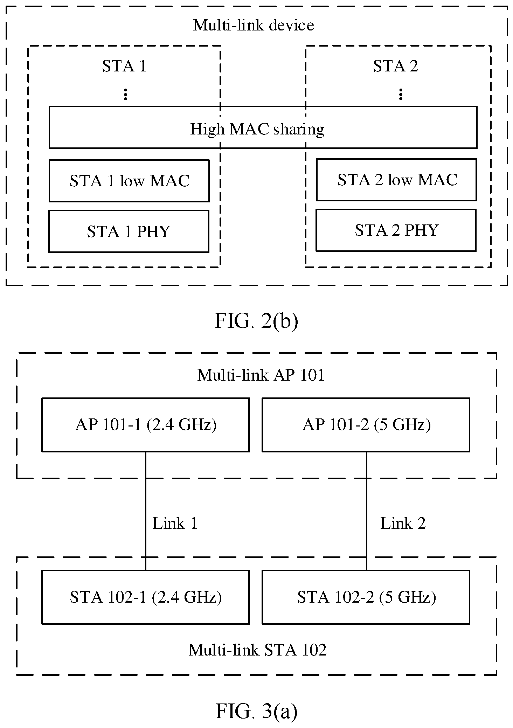

FIG. 2(a) and FIG. 2(b) each are a schematic diagram of a structure of a multi-link device. The 802.11 standard focuses on an 802.11 physical layer (PHY) part and a media access control (MAC) layer part in a multi-link device. As shown in FIG 2(a), a plurality of STAs included in the multi-link device are independent of each other at a low MAC (Low MAC) layer and a PHY layer, and are also independent of each other at a high MAC (High MAC) layer. As shown in FIG. 2(b), a plurality of STAs included in the multi-link device are independent of each other at a low MAC (Low MAC) layer and a PHY layer, and share a high MAC (High MAC) layer. Certainly, in a multi-link communication process, the multi-link STA device may use a structure in which STAs are independent of each other at the high MAC layer, and the multi-link AP device uses a structure in which APs share the high MAC layer. Alternatively, the multi-link STA device may use a structure in which STAs share the high MAC layer, and the multi-link AP device uses a structure in which APs are independent of each other at the high MAC layer. Alternatively, the multi-link STA device may use a structure in which STAs share the high MAC layer, and the multi-link AP device may also use a structure in which APs share the high MAC layer. Alternatively, the multi-link STA device may use a structure in which STAs are independent of each other at the high MAC layer, and the multi-link AP device may also use a structure in which APs are independent of each other at the high MAC layer. A schematic diagram of an internal structure of the multi-link device is not limited in this embodiment of this application. FIG. 2 is merely an example for description. For example, the high MAC layer or the low MAC layer may be implemented by one processor in a chip system of the multi-link device, or may be implemented by different processing modules in a chip system.

For example, the multi-link device in this embodiment of this application may be a single-antenna device, or may be a multi-antenna device. For example, the device may be a device with more than two antennas. A quantity of antennas included in the multi-link device is not limited in this embodiment of this application. In this embodiment of this application, the multi-link device may allow traffic of a same access type to be transmitted on different links, or even allow same data packets to be transmitted on different links. Alternatively, the multi-link device may not allow traffic of a same access type to be transmitted on different links, but may allow traffic of different access types to be transmitted on different links.

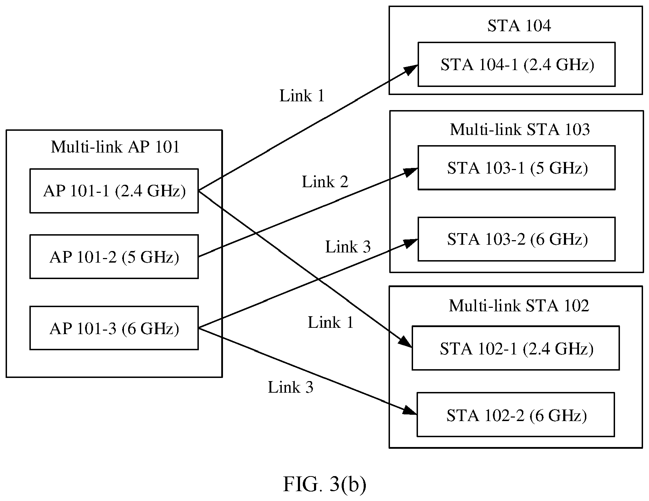

The multi-link device can operate on a frequency band of sub 1 GHz, 2.4 GHz, 5 GHz, 6 GHz, and a high frequency band of 60 GHz. FIG. 3 is two schematic diagrams of communication between a multi-link device and another device in a wireless local area network through a plurality of links.

FIG. 3(a) is a schematic diagram of communication between a multi-link AP device 101 and a multi-link STA device 102. The multi-link AP device 101 includes an affiliated AP 101-1 and an affiliated AP 101-2, and the multi-link STA device 102 includes an affiliated STA 102-1 and an affiliated STA 102-2. The multi-link AP device 101 and the multi-link STA device 102 use a link 1 and a link 2 for concurrent transmission.

FIG. 3(b) is a schematic diagram of communication between a multi-link AP device 101 and a multi-link STA device 102, a multi-link STA device 103, and a STA 104. The multi-link AP device 101 includes an affiliated AP 101-1 to an affiliated AP 101-3, the multi-link STA device 102 includes two of an affiliated STA 102-1 and an affiliated STA 102-2, the multi-link STA device 103 includes two of an affiliated STA 103-1, an affiliated STA 103-2, and an affiliated STA 103-3, and the STA 104 is a single-link device. The multi-link AP device may separately use a link 1 and a link 3 to communicate with the multi-link STA device 102, separately use a link 2 and the link 3 to communicate with the multi-link STA device 103, and use the link 1 to communicate with the STA 104. In an example, the STA 104 operates on a 2.4 GHz frequency band. The multi-link STA device 103 includes the STA 103-1 and the STA 103-2, where the STA 103-1 operates on a 5 GHz frequency band, and the STA 103-2 operates on a 6 GHz frequency band.

The multi-link STA device 102 includes the STA 102-1 and the STA 102-2, where the STA 102-1 operates on a 2.4 GHz frequency band, and the STA 102-2 operates on a 6 GHz frequency band. The AP 101-1 operating on the 2.4 GHz frequency band in the multi-link AP device may perform uplink or downlink data transmission with the STA 104 and the STA 102-2 in the multi-link STA device 102 through the link 1. The AP 101-2 operating on the 5 GHz frequency band in the multi-link AP device may perform uplink or downlink data transmission with the STA 103-1 operating on the 5 GHz frequency band in the multi-link STA device 103 through the link 2. The AP 101-3 operating on the 6 GHz frequency band in the multi-link AP device 101 may perform uplink or downlink data transmission with the STA 102-2 operating on the 6 GHz frequency band in the multi-link STA device 102 through the link 3, and may also perform uplink or downlink data transmission with the STA 103-2 in the multi-link device STA through the link 3.

It should be noted that FIG. 3(a) shows that the multi-link AP device supports only two frequency bands, and FIG. 3(b) shows only an example in which the multi-link AP device supports three frequency bands (2.4 GHz, 5 GHz, and 6 GHz), each frequency band corresponds to one link, and the multi-link AP device 101 may operate on one or more of the link 1, the link 2, or the link 3. On the AP side or the STA side, the link herein may further be understood as a station operating on the link. In an actual application, the multi-link AP device and the multi-link STA device may further support more or fewer frequency bands. In other words, the multi-link AP device and the multi-link STA device may operate on more or fewer links. This is not limited in this embodiment of this application.

For example, the multi-link device is an apparatus with a wireless communication function, and the apparatus may be the entire device, or may be a chip, a processing system, or the like installed on the entire device. The device on which the chip or the processing system is installed may implement the method and functions in the embodiments of this application under control of the chip or the processing system. For example, the multi-link STA in this embodiment of this application has a wireless transceiver function, may support the 802.11 series protocol, and may communicate with the multi-link AP, another multi-link STA, or a single-link device. For example, the multi-link STA is any user communication device that allows a user to communicate with an AP and further to communicate with the WLAN. For example, the multi-link STA may be user equipment that can access a network, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone, or may be an internet of things node in the internet of things, an in-vehicle communication apparatus in the internet of vehicles, or the like. The multi-link STA may alternatively be a chip or a processing system in the foregoing terminals. The multi-link AP in this embodiment of this application is an apparatus that provides a service for the multi-link STA and may support the 802.11 series protocol. For example, the multi-link AP may be a communication entity such as a communication server, a router, a switch, or a network bridge, or the multi-link AP may include various forms of macro base stations, micro base stations, relay stations, or the like. Certainly, the multi-link AP may further be a chip and a processing system in the various forms of devices, to implement the method and functions of this embodiment of this application. In addition, the multi-link device may support high-rate and low-latency transmission. With continuous evolution of wireless local area network application scenarios, the multi-link device may further be used in more scenarios, for example, serve as a sensor node (for example, a smart water meter, a smart electricity meter, or a smart air detection node) in a smart city, a smart device (for example, a smart camera, a projector, a display screen, a TV, a stereo, a refrigerator, a washing machine, or the like) in a smart home, a node in internet of things, an entertainment terminal (for example, AR, VR, or another wearable device), a smart device (for example, a printer, a projector, or the like) in a smart office, an internet of vehicles device in internet of vehicles, or infrastructure (for example, a vending machine, a self-service kiosk in a shopping mall, a self-checkout device, a self-service food machine, or the like) in daily life scenarios. Specific forms of the multi-link STA and the multi-link AP are not specifically limited in this embodiment of this application, and are merely examples for description herein. The 802.11 protocol may be a protocol that supports 802.11be or is compatible with 802.11be.

It is clear that the multi-link device uses a plurality of links for concurrent communication, to greatly increase a transmission rate. However, because all the plurality of links need to simultaneously operate when multi-link communication is used, more power needs to be consumed, and power consumption overheads are higher. Therefore, how to reduce power of the multi-link device is crucial.

Power-saving technologies used in 802.11ax include TIM (traffic indication map, traffic indication map) power saving technology, a TWT (target wake up time, target wake up time) power-saving technology, an APSD (automatic power save delivery, automatic power save delivery) power-saving technology, and the like.

The following describes the TIM power-saving technology. In the 802.11 protocol, a STA generally has two operating modes: a non-power-saving mode and a power-saving mode. When the STA operates in the non-power-saving mode, the STA is in an awake state (awake state, which may also be referred to as wake state) regardless of whether there is to-be-transmitted data on the STA. When the STA operates in the power-saving mode, the STA may be in an awake state (awake state) when transmitting data with an AP. When there is no data transmission between the STA and the AP, the STA may be in a doze state (doze state) to reduce power consumption. The STA may send a frame to the AP to notify whether the STA is in the power-saving mode. If a power-saving bit in a frame control field (frame control field) in a MAC header of the frame is set to 1, the AP is notified that the STA is in the power-saving mode. If the power-saving bit in the frame control field (frame control field) in the MAC header of the frame is set to 0, the AP is notified that the STA is in the non-power-saving mode.

To reduce power consumption of the STA, the AP may buffer downlink traffic of the STA, and send the downlink traffic to the STA after the STA wakes up. However, because buffer space of the AP is limited, the AP periodically adds a TIM element to an 802.11 beacon frame to notify a STA associated with the AP whether there is downlink traffic to be received. The STA operating in the power-saving mode periodically wakes up to receive the beacon frame sent by the AP and determines whether the AP transmits downlink traffic of the STA. If the AP transmits no downlink traffic of the STA, the STA may switch to the doze state. If the AP transmits downlink traffic of the STA, the STA may select a time point to wake up and send a power saving poll frame (PS-poll frame) to the AP, to notify the AP that the STA is in the awake state (awake state). The time point may be the same as or different from a time point for receiving the beacon frame.

For example, the 802.11 beacon (beacon) frame may be classified into two types: a traffic indication map (traffic indication map, TIM) beacon frame, and a delivery traffic indication map (delivery traffic indication map, DTIM) beacon frame. Compared with the TIM beacon frame, the DTIM beacon frame indicates both unicast (individually addressed) information and multicast (group addressed) information buffered in the AP. Each beacon (beacon) frame includes a TIM element field. The TIM element field indicates which STA managed by the AP has downlink data buffered in the AP. The following Table 1 shows a frame format of the TIM element field.

**Table 1**

| | | | | | |
|---|---|---|---|---|---|
| Element ID (1 byte) | Length (1 byte) | DTIM count (1 byte) | DTIM period (1 byte) | Bitmap control (1 byte) | Partial virtual bitmap (1-251 bytes) |

As shown in Table 1, an element ID (identifier) field identifies that the element is a TIM element. A length field indicates a length of the TIM element. A DTIM period (DTIM Period) field indicates a period duration for receiving the DTIM beacon frame, which is also referred to as an arrival interval and expressed in beacon frame period. A DTIM count (DTIM count) field indicates a quantity of TIM beacon frames by the time that a next DTIM beacon frame arrives. The DTIM count field is a variable count value. If a value of the DTIM count field is 0, it indicates that the beacon frame is a DTIM beacon frame. Otherwise, the beacon frame is a TIM beacon frame, that is, if the value of the DTIM count field is not 0, it indicates that the beacon frame is a TIM beacon frame. For example, if the DTIM period field is set to 1, the DTIM count field in each TIM element field is equal to 0. Therefore, each beacon frame is a DTIM beacon frame.

A first bit (bit 0) in a bitmap control (Bitmap control) field in Table 1 indicates whether there is downlink multicast traffic in the DTIM beacon frame sent by the AP. Bits 1 to 7 in the bitmap control (Bitmap control) field indicate an offset of the partial virtual bitmap. In other words, the offset is measured in bytes, that is, 8 bits. Each bit in a partial virtual bitmap field is mapped to one STA. If a value of the bit is 1, it indicates that downlink data of a STA corresponding to the bit is buffered in the AP. For example, if the offset is 0, the partial virtual bitmap starts from an association identifier (association identifier, AID) 1. If the offset is 1, the partial virtual bitmap starts from an AID 9. An end bit of the partial virtual bitmap is determined by the length field. Therefore, a maximum length of the partial virtual bitmap is 251 bytes, that is, 2008 bits.

For example, the length field is 4 bytes, and the bits 1 to 7 in the bitmap control field indicate that the offset of the partial virtual bitmap is 0. In this case, if the partial virtual bitmap field is 01100110, the TIM element field indicates that downlink data of STAs corresponding to an AID 2, an AID 3, an AID 6, and an AID 7 is buffered in the AP. For another example, the length field is 4 bytes, and the bits 1 to 7 in the bitmap control field indicate that the offset of the partial virtual bitmap is 1. In this case, if the partial virtual bitmap field is 01100110, the TIM element field indicates that downlink data of STAs corresponding to an AID 10, an AID 11, an AID 14, and an AID 15 is buffered in the AP.

For example, if the AP operates in a multiple basic service set identifier (BSSID) mode, the AP includes a basic service set (BSS) identified by a transmitted BSSID, and further includes a plurality of BSSs identified by non-transmitted BSSIDs. A maximum quantity of 2ⁿ BSSs is allowed in a multiple BSSID set, where n is a value indicated by a MaxBSSID indicator field in a multi BSSID element. In this case, bits 1 to 2ⁿ-1 of the partial virtual bitmap field indicate downlink multicast traffic corresponding to a BSS identified by a non-transmitted BSSID. The bit 2ⁿ indicates, based on an indication of the offset of the partial virtual bitmap, whether the STA corresponding to each AID has downlink unicast traffic.

The 802.11-2016 protocol further optimizes a length of the partial virtual bitmap. For example, a method A and a method B described in the 802.11-2016 protocol are used. A method C specified in the subsequent 802.11ah draft protocol may also be used. These methods are all applicable to the embodiments of this application. If the AP operates in a multiple BSSID mode, the AP includes a BSS identified by a transmitted BSSID, and further includes a BSS identified by a non-transmitted BSSID. A maximum quantity of 2ⁿ BSSs is allowed in a multiple BSSID set, where n is indicated by a MaxBSSID indicator field in a multi BSSID element. In this case, bits 1 to 2ⁿ-1 of the partial virtual bitmap field indicate multicast data traffic corresponding to a BSS identified by a non-transmitted BSSID. The bit 2ⁿ indicates, based on an indication of the offset of the partial virtual bitmap, whether the STA corresponding to each AID has downlink unicast data traffic.

It can be learned that the power-saving technology in 802.11ax is applicable only to a single-link device, and cannot be applicable to a multi-link device. Embodiments of this application provide a power saving method applicable to a multi-link device. An affiliated STA in the multi-link device may report, on one link, that one or more stations included in the multi-link device are in an awake state, so that other STAs do not report their awake states one by one. This can reduce power consumption of the multi-link device and improve spectrum utilization. In addition, embodiments of this application further provide another power saving method applicable to a multi-link device. A new buffered traffic notification manner is used to notify whether a station in a multi-link station has buffered traffic, so that all stations in the multi-link station device do not periodically wake up to receive a beacon frame sent by an AP. This can save power.

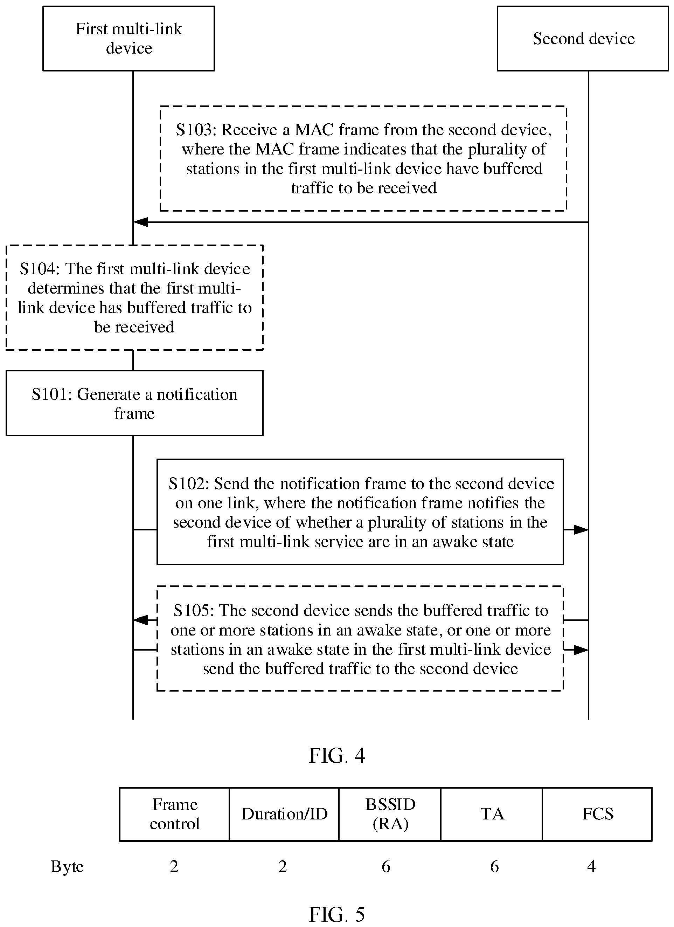

Embodiment 1 provides a power saving method, for multi-link communication. This method is a power saving method applicable to a multi-link device. An affiliated STA in the multi-link device reports, on one link, that more stations included in the multi-link device are in an awake state, so that one or more stations do not report their awake states. This can reduce power consumption of the multi-link device and improve spectrum utilization. FIG. 4 is a schematic flowchart of a power saving method for multi-link communication according to Embodiment 1. The method includes the following steps.

S101: One station in a first multi-link device generates a notification frame, where the notification frame notifies a second device of whether a plurality of stations in the first multi-link device are in an awake state (awake state).

The first multi-link device includes a plurality of stations, and each station operates on one link. Optionally, the notification frame may be generated by one station, or may be generated by a plurality of stations, or may be generated by a processing unit in the first multi-link device. The processing unit is shared by the plurality of stations. The second device may be a second multi-link device, or may be a single-link device instead of a multi-link device. In a scenario, the first multi-link device is a multi-link STA device, and the second device is a multi-link AP device. For example, as shown in FIG. 1, the first multi-link device is a multi-link STA device 102, and the second device is a multi-link AP device 101.

S102: The first multi-link device sends the notification frame to the second device on one link, where the notification frame notifies the second device of whether the plurality of stations in the first multi-link device are in an awake state (awake state).

One or more stations in the first multi-link device may send a notification frame on one or more links in the first multi-link device, to indicate that the plurality of stations are in an awake state. For example, a station sending the notification frame may be a primary station in the first multi-link device, and the primary station sends the notification frame on a primary link. In this way, the plurality of stations do no need to separately send the notification frame on the plurality of links, but only one station needs to report whether the plurality of stations in the multi-link device are in an awake state. This can reduce power consumption of the multi-link device. Correspondingly, after receiving the notification frame, the second device may determine which stations in the first multi-link device are in an awake state.

Certainly, the notification frame may alternatively notify only whether one station in the first multi-link device is in an awake state, and the notified station may not be a station sending the notification frame, but another station in the first multi-link device. For example, a STA 102-1 in the first multi-link device sends a notification frame to indicate that a STA 102-2 is in an awake state. In this case, the second device may subsequently communicate with the STA 102-2, so that switching between communication stations can be implemented, which also means that switching between communication links can be implemented. Therefore, communication between the first multi-link device and the second device is more flexible.

In an example, the first multi-link device may actively send the notification frame to the second device, to indicate which stations in the first multi-link device are in an awake state. In still another example, the first multi-link device may determine, based on another frame or signaling information before step S101, which stations have buffered traffic (for example, downlink traffic) to be received, and send the notification frame. In addition to the downlink traffic, a station in the multi-link station device may be in an awake state for another reason. For example, if there is uplink traffic to be sent to another device, the first multi-link device may also report, by using the notification frame, that the station in the multi-link station device is in an awake state.

For example, the station sending the notification frame may be one of the plurality of stations having buffered traffic to be received or having buffered traffic to be sent, or may be another station, for example, the primary station. There may be one or more primary stations. In this way, the plurality of stations having buffered traffic to be received or having buffered traffic to be sent do not need to separately send the notification frame on a plurality of links, and only one station needs to send the notification frame. This can reduce power consumption of the multi-link device. After receiving the notification frame, the second device may determine which stations in the first multi-link device are in an awake state. The plurality of stations having buffered traffic to be received or having buffered traffic to be sent may be some or all of the plurality of stations included in the first multi-link device. For example, the first multi-link device is a multi-link STA device, and includes three STAs 2. Two of the three STAs 2 have buffered traffic to be received, or all of the three STAs 2 have buffered traffic to be received, or certainly, one STA 2 may have buffered traffic to be received.

Having buffered traffic to be received may also be understood as that another device (for example, the second device) has buffered traffic to be sent to the plurality of stations. Having buffered traffic to be sent may be understood as that there are buffered traffic to be sent to another device (for example, the second device). For example, the first multi-link device is a multi-link STA device, and the second device is a multi-link AP device. In this case, a to-be-received buffered traffic may be referred to as downlink buffered traffic, or may be referred to as downlink data traffic, downlink traffic, or the like. To-be-sent buffered traffic may be referred to as uplink buffered traffic, or may be referred to as uplink data traffic, uplink traffic, or the like.

Optionally, before step S101, the method further includes S103 and S104.

S 103: Receive a MAC frame from the second device, where the MAC frame indicates that the plurality of stations in the first multi-link device have buffered traffic to be received.

S104: The first multi-link device determines, based on the MAC frame, that a station has buffered traffic (buffered traffic) to be received in the first multi-link device.

Optionally, after step S102, the method further includes: S105: The second device sends the buffered traffic to one or more stations in an awake state, or the first multi-link device sends the buffered traffic to the second device.

In steps S101 and S103, the notification frame may carry information indicating whether the one or more stations in the first multi-link device are in an awake state. Optionally, a duration/ID field in the notification frame may indicate that the one or more stations in the first multi-link device are in an awake state. Alternatively, another field in a MAC header of the notification frame, for example, an HT-control field, may indicate that the one or more stations in the first multi-link device are in an awake state. The notification frame may be a PS-Poll frame or another frame, for example, a data frame (including a null data frame) or a trigger frame-null data frame in automatic power save transfer APSD (automatic power save delivery, APSD), where the APSD is further classified into unscheduled APSD and scheduled APSD.

The following uses a PS-Poll frame as an example to describe in detail how to indicate, by using the PS-Poll frame, whether one or more stations in the first multi-link device are in an awake state (which may also be referred to as a wake state).

The PS-Poll frame includes a duration (duration)/ID (identifier) field, and the duration/ID field may indicate that the one or more stations in the first multi-link device are in an awake state (awake state). The duration/ID field includes 2 bytes (16 bits), where the 16 bits are denoted as B0 to B15 (B0 to B15). If a value of the B0 bit included in B0 to B15 is 0, it indicates that the PS-Poll frame is a BDT PS-Poll frame (BDT, bidirectional TXOP, bidirectional transmit opportunity), and bits (B2 to B15) following the B0B1 bits in the duration/ID field indicate a duration. Optionally, the PS-Poll frame further includes a frame control field, a BSSID (RA) (Basic service set identifier, basic service set identifier, receiver address, receiver address) field, a TA (transmitter address, transmitter address) field, an FCS (Frame check sequence, frame check sequence) field, and the like. FIG. 5 is a diagram of a specific structure the PS-Poll frame.

For example, a method for using the duration/ID field bit to indicate that the one or more stations are in an awake state includes but is not limited to:
Method 1: All or some bits in a rear portion of the duration/ID field indicate that the one or more stations are in an awake state. Optionally, if a value of B0B1 in the duration/ID field is 10, it further indicates that the PS-Poll frame is a new PS-Poll frame. Optionally, a structure of the new PS-Poll frame may be shown in FIG. 5, and a definition of a duration/ID field of the new PS-Poll frame is different from that of the existing PS-Poll frame in 802.11.

In an example, B2 to B 15 in the duration/ID field carry a link identifier bitmap. The link identifier bitmap includes a plurality of bits, and one bit corresponds to one of a plurality of links supported by the first multi-link device, or in other words, one bit corresponds to a station operating on one link in the first multi-link device. One station in the first multi-link device operates on one link, or a plurality of stations may operate on a same link. Optionally, one bit corresponds to one link identifier, so that one bit indicates whether a station indicated by the link identifier is in an awake state. Therefore, one bit in the link identifier bitmap indicates whether one station operating on a corresponding link in the first multi-link device is in an awake state. For example, a first value of an n^{th} bit indicates that the station on the corresponding link is awake, and a second value of the n^{th} bit indicates that the station on the corresponding link is not awake. Optionally, the duration/ID field may further include a length field, and the length field indicates a length of the link identifier bitmap. After receiving the link identifier bitmap, the second device may determine which stations in the first multi-link device are in an awake state, and may further determine which stations are not awake.

In still another example, B2 to B15 in the duration/ID field carry a link identifier number field. The link identifier number field carries link information indicating a link, and the link identifier number field may indicate that a station on a link corresponding to the link information is in an awake state. The link information may include a link identifier (Identifier, ID), or the link information includes an operation class (operating class) and a channel number (channel number) corresponding to the link, or the link information includes a MAC address of the link, or a combination thereof. In this manner, B2 to B15 in the duration/ID field may not carry an identifier number of a link on which a station that is not in an awake state operates. This can reduce overheads. It should be noted that the link identifier may be negotiated or communicated before communication. A specific negotiation or communication manner is described in detail above. Details are not described herein again.

In still another example, B2 to B15 in the duration/ID field carry a control field and a station status indication field. The control field includes indication information indicating whether the station status indication field includes the link identifier bitmap or the link identifier number field. For definitions of the link identifier bitmap and the link identifier number field, refer to the foregoing two examples.

Certainly, in the method 1, B0B1 in the duration/ID field may be another value.

Method 2: The bits B2 to B15 in the duration/ID field carry a special AID value. For example, an AID whose value greater than 2007 indicates that one or more stations in the first multi-link device are in an awake state. Optionally, B0B1 further indicates that the PS-Poll frame is a non-BDT PS-Poll frame.

In an example, the special AID value indicates that all stations operating on a plurality of links are in an awake state. For example, the plurality of links are links included when a multi-link association is established. In another example, the special AID value indicates that all stations having buffered traffic to be received or having buffered traffic to be sent are in an awake state. Which stations having buffered traffic to be received or having buffered traffic to be sent may be determined by using a plurality of methods. For example, which stations having buffered traffic may be determined by using the TIM element in the beacon frame broadcast by the second device, or may be determined in another manner.

In 802.11ax, if a value of B0B1 is 11, it indicates that the PS-Poll frame is a non-BDT PS-Poll frame, where bits (B2 to B15) in the rear portion of the duration/ID field indicate an association identifier AID of a PS-Poll frame transmit end. Therefore, when the method 2 is used, an indication manner in the method 2 is simpler. When B0B1 in the duration/ID field = 11, B2 to B15 carry an AID, and the AID is a special AID, to indicate that a plurality of stations in the first multi-link device are in an awake state. This can reduce signaling overheads and simplify the indication manner. In addition, because the stations in the first multi-link station have only two states: awake and non-awake, indication can be completed by using one special AID value or two special AID values. Therefore, implementation is simple.

Certainly, the special AID may include one or more of the following four special values. For example, if B2 to B15 are set to a first special value, it indicates that all stations operating on a plurality of links are in an awake state. A second special value of B2 to B15 indicates that stations, operating on a plurality of links, having buffered traffic to be received or having buffered traffic to be sent are in an awake state. Optionally, if B2 to B15 may further be set to a third special value, it indicates that all stations on a first plurality of links are not awake, and a fourth special value of B2 to B15 indicates that stations, operating on a plurality of links, having buffered traffic to be received or having buffered traffic to be sent are not in an awake state.

It can be learned from the description in the foregoing paragraph that the special AID value may correspond to at least four functions. Certainly, one special AID value may indicate one of the functions, or two special AID values may respectively indicate two of the functions, or certainly four special AID values may respectively indicate four functions. Certainly, a mapping relationship between the special AID value and the function may be changeable, and a specific function corresponding to a special AID value is not limited herein.

In the method 2, if the duration/ID field starts from 11, that is, a value of bits 0 and 1 (B0B1) of the duration/ID field is 11, it indicates that B2 to B15 carry the AID value.

Method 3: The notification frame includes an aggregated frame of a plurality of PS-Poll frames, one PS-Poll frame includes a duration/ID field, and bits (B2 to B15) in the rear portion of the duration/ID field indicate an association identifier AID. The AID indicates that a station corresponding to the AID is in an awake state. In this case, a plurality of duration/ID fields of the plurality of PS-Poll frames may include a plurality of AIDs, to indicate that a plurality of stations in a first multi-link station are in an awake state. Optionally, if a value of B0B1 of the duration/ID field is 11, it indicates that the PS-Poll frame is a non-BDT PS-Poll frame. Optionally, if stations corresponding to AIDs included in the foregoing plurality of PS-Poll frames belong to a same multi-link station device, a TA address of the PS-Poll frame is a MAC address of a station, in the multi-link station device, that operates on a link on which the PS-Poll frame is located, or an address of a MAC SAP (service access point) of the multi-link station, that is, an address shared by a plurality of stations.

Method 4: For example, the duration/ID field carries a start AID field and an AID bitmap field. Optionally, the last 14 bits include the start AID field and the AID bitmap field. The start AID field carries a start AID, and the start AID may be a short AID. The AID bitmap field indicates whether a station corresponding to a sequential AID greater or less than the start AID is in an awake state, or may indicate whether a station corresponding to a sequential link identifier greater or less than a link identifier corresponding to a station indicated by the start AID is in an awake state. The sequential AID or the sequential link identifier does not require values of the AID and values of the link identifier to be consecutive, but to be consecutive in order. For example, if link identifiers corresponding to three stations included in the multi-link device are 1, 3, and 5, the link identifiers 1, 3, and 5 are in ascending order. A value of bits 0 and 1 (B0B1) of the duration/ID field is 10. A start AID field in bits B2 to B15 carries a short AID (or referred to as a partial AID) value. The short AID value occupies less than 14 bits, for example, 11 bits. An AID bitmap field in bits B2 to B15 occupies remaining bits, to indicate whether a station operating on another link is in an awake state. For example, the first 11 bits in B2 to B15 are a short AID of a station in the first multi-link device, and the remaining three bits indicate whether stations corresponding to three AIDs in a cyclic sequence that are greater than or less than the AID are in an awake state. If a corresponding bit is set to a first value, it indicates that the station is in an awake state. If a corresponding bit is set to a second value, it indicates that the station is in a doze state. For example, the first value is 1, and the second value is 0. It is assumed that the first multi-link device has four stations in total (AIDs are an AID 1 to an AID 4). For example, if an AID indicated by the first 11 bits in B2 to B15 is 1, corresponding to a station 1 (whose AID is 1) in the first multi-link device, and a value of the last three bits is 101, correspondingly it indicates that a station whose AID is 2 is in an awake state, a station whose AID is 3 is in a doze state, and a station whose AID is 4 is in an awake state. For another example, if an AID indicated by the first 11 bits in B2 to B15 is 2, corresponding to a station 2 (whose AID is 2) in the first multi-link device, and a value of the last three bits is 101, correspondingly it indicates that a station whose AID is 3 is in an awake state, a station whose AID is 4 is in a doze state, and a station whose AID is 1 is in an awake state. Optionally, the short AID field may indicate that a station corresponding to the short AID field is in an awake state, or may indicate that a station corresponding to the short AID field is in a doze state, or may have no meaning. If it indicates that the station corresponding to the start AID is in an awake state, a quantity of indicated stations may be increased, and indication efficiency is higher. Certainly, the AID bitmap may alternatively indicate a status of the station starting from the start AID. For another example, if an AID indicated by the first 11 bits in B2 to B15 is 2, corresponding to a station 2 (whose AID is 2) in the first multi-link device, and a value of the last three bits is 101, correspondingly it indicates that a station whose AID is 2 is in an awake state, a station whose AID is 3 is in a doze state, and a station whose AID is 4 is in an awake state.

Method 5: For example, the duration/ID field carries a start link identifier field and a link identifier bitmap field. Optionally, the last 14 bits include the start link identifier field and the link identifier bitmap field. The start link identifier field carries one link identifier. The link identifier bitmap field indicates whether a station corresponding to a sequential link identifier greater or less than a link identifier corresponding to a station indicated by the start link identifier field is in an awake state. For example, a link identifier 1 carried in the start link identifier field indicates a station on a link 1, and the link identifier bitmap includes three bits, respectively indicating whether stations on link identifiers 2 to 4 are in an awake state. Certainly, the link identifier bitmap may alternatively perform indication starting from the start link identifier field. For example, if a link identifier indicated by the first 11 bits in B2 to B15 is 2, corresponding to a station 2 (whose AID is 2) in the first multi-link device, and a value of the last three bits is 101, correspondingly it indicates a station corresponding to the link identifier 2 is in an awake state, a station corresponding to the link identifier 3 is in a doze state, and a station corresponding to the link identifier 4 is in an awake state.

Certainly, it should be noted that the method 1 to the method 5 are not limited to being implemented using the duration/ID field in the notification frame, and are not limited to being implemented using the duration/ID field in the PS-Poll frame. Certainly, a same or similar indication method may also be performed using another field in the notification frame, for example, another field of a MAC header in the notification frame. For example, an HT-control field notifies that one or more stations in the first multi-link device are in an awake state. The duration/ID field may be compatible with a frame structure defined in the 802.11 protocol, has low complexity, and has low signaling overheads.

The following describes in detail how the first multi-link device determines, in steps S103 and S104, that the plurality of stations have the buffered traffic (buffered traffic) to be received in the first multi-link device.

Manner 1: Before S101, the first multi-link device receives, from the second device, a beacon (Beacon) frame that carries a TIM element, where the TIM element notifies which stations in the first multi-link device have buffered traffic (buffered traffic) to be received. The first multi-link device may determine, based on the TIM element in the beacon frame, which stations have buffered traffic to be received.

Optionally, the second device sends the beacon frame on one link, where the beacon frame carries information about whether stations on a plurality of links have buffered traffic to be received. A specific implementation includes but is not limited to:
Method 1: The existing TIM element is reused. The multi-link AP device allocates one or more association identifiers AIDs (association identifiers) to each station in the multi-link STA. Each bit in a partial virtual bitmap field of the TIM element corresponds to one AID. If one AID is allocated to each station of the multi-link STA, each bit in the partial virtual bitmap field of the TIM element indicates whether a corresponding station has a corresponding downlink traffic indication. If two AIDs are allocated to each station of the multi-link STA, two bits in the partial virtual bitmap field of the TIM element respectively indicate whether a corresponding station has a corresponding downlink broadcast traffic indication and a corresponding downlink unicast traffic indication.
Method 2: A new multi-link TIM element is added, where the multi-link TIM element includes a plurality of new TIM sub-elements, and each new TIM sub-element includes a link identifier number and a TIM element. Each new TIM sub-element indicates whether a station operating on a link identified by the link identifier number has a downlink traffic indication, where a bit 0 in a bitmap control field of the new TIM sub-element indicates whether there is a downlink multicast data traffic when an AP sends a DTIM beacon frame, and a corresponding bit in a partial virtual bitmap field of the new TIM sub-element indicates whether the station operating on the link identified by the link identifier number has downlink unicast traffic. The link identifier number may include an identifier number of a link (or referred to as a number of a link), an operation class and a channel number, a MAC address, or the like.

The multi-link station device receives the beacon frame on one or more links, to learn whether a plurality of stations in the multi-link station device have buffered traffic (or referred to as downlink traffic) to be received, including the downlink unicast traffic and the downlink broadcast traffic.

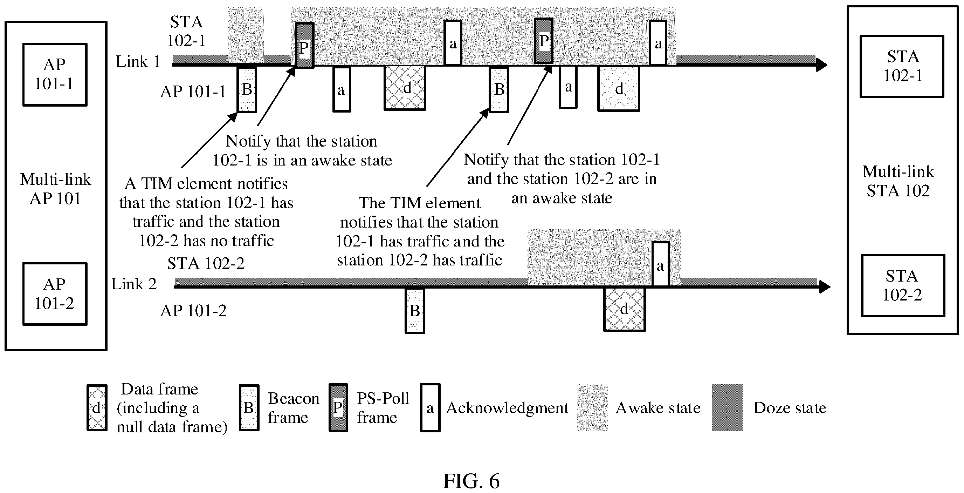

For example, as shown in FIG. 6, the multi-link station device (the first multi-link device, for example, the multi-link STA 102 in FIG. 1) selects the station STA 102-1 to periodically wake up to receive the beacon frame. After receiving a first beacon frame (a beacon 1, denoted as B in the figure) in FIG. 6, the multi-link station device learns that the station 102-1 has downlink traffic and the station 102-2 has no downlink traffic. Therefore, after waking up, the station 102-1 sends a PS-Poll frame (denoted as P in FIG. 6) to notify that the station STA 102-1 in the multi-link station device is in an awake state and the station STA 102-2 is in a doze state. Then, the station STA 102-1 performs data communication with the AP 101-1 in the multi-link AP 101, for example, sends a data frame (denoted as d in FIG. 6). Optionally, the STA 102-1 and the STA 102-2 each may further reply with an acknowledgment frame (denoted as a in FIG. 6).

After receiving a second beacon frame (a beacon 2) in the figure, the station 102-1 in the multi-link station device learns that both the station 102-1 and the station 102-2 have downlink traffic, and then sends the PS-Poll frame to the AP 101-1 to notify that both the station 102-1 and the station 102-2 in the multi-link station device are in an awake state. Certainly, as shown in FIG. 6, the AP 101-2 may also send the beacon frame on a link 2 (a link 2).

Manner 2: A link identifier bitmap and a more data bit (more data bit) in a MAC frame (for example, a data frame) indicate that a plurality of stations in the first multi-link device have buffered traffic (buffered traffic) to be received, or a downlink traffic bitmap in a MAC frame indicates that a plurality of stations in the first multi-link device have buffered traffic (buffered traffic) to be received. For a specific implementation, refer to Embodiment 2. Details are not described herein again. Therefore, the first multi-link device may determine a station that has buffered traffic to be received.

Manner 3: A notification manner defined in the 802.11ax protocol may alternatively be used. For example, the second device may separately send one beacon frame on a plurality of links. A beacon frame on each link carries one TIM element, to notify whether a station on the link has buffered traffic. The first multi-link device determines, based on the plurality of beacon frames, that there are a plurality of stations having buffered traffic (buffered traffic) to be received in the first multi-link device.

This embodiment of this application provides a power saving method applicable to a multi-link station. One station may be used to report whether one or more stations included in the multi-link device are in an awake state. This can reduce signaling overheads and save power.

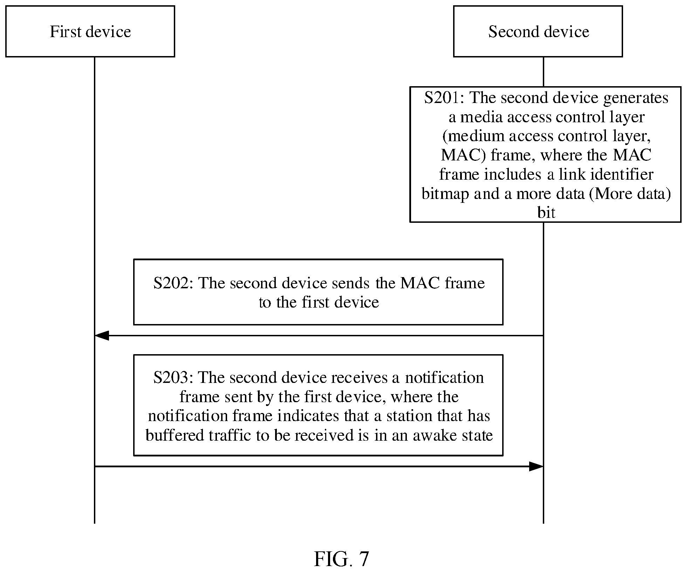

Embodiment 2 provides a buffered traffic notification method (buffer status report), to notify whether each station in a multi-link station has buffered traffic to be received, so that each station in the multi-link station device does not periodically wake up to receive a beacon frame sent by an AP. This can save power. For example, as shown in FIG. 7, the method includes the following steps.

S201: A second device generates a media access control layer (medium access control layer, MAC) frame, the MAC frame includes a link identifier bitmap and a more data (More data) bit, the link identifier bitmap includes a plurality of bits, one bit corresponds to one station on one of a plurality of links, the more data bit includes one bit, and a combination of the link identifier bitmap and the more data bit indicates whether a station on a link corresponding to the link identifier bitmap has buffered traffic to be received.

Optionally, the MAC frame is a data frame. The second device may be a multi-link device, or may be a single-link device. Optionally, the link identifier bitmap is carried in an HT-control field, and the more data bit is carried in a frame control (Frame control) field.

S202: The second device sends the MAC frame to the first device.

For example, in this embodiment of this application, the second device is a multi-link AP, and the first device is a multi-link STA.

For example, an n^{th} bit of the link identifier bitmap corresponds to a link n. If the n^{th} bit is set to a first value, for example, 1, a value of the more data bit is applicable to a station operating on an n^{th} link in the multi-link station receiving the frame. Optionally, if an n^{th} bit of the link identifier bitmap is set to a second value, for example, 0, a value of the more data bit is applicable to a station other than a station operating on an n^{th} link in the multi-link station receiving the frame. Optionally, one bit in the link identifier bitmap may correspond to one link identifier, and therefore may correspond to one station on the link. How the link identifier specifically corresponds to the station is described above, and details are not described herein again.

For example, XNOR is performed on the value of the more data bit and a value of a bit in the link identifier bitmap. If a result of the XNOR is a first value, it indicates that there is buffered traffic to be received. If a result of the XNOR is a second value, it indicates that there is no buffered traffic to be received. If the more data bit is set to 1/0, it indicates that a station on a link corresponding to a bit with a value of 1 in the link identifier bitmap has a/has no buffered traffic to be received. Optionally, if the more data bit is set to 1/0, it indicates that a station on a link corresponding to a bit with a value of 0 in the link identifier bitmap has no/has buffered traffic to be received.

Table 2 shows an example.

**Table 2**

| More data bit (1 bit) | Link identifier bitmap 8 bits (B0 to B7) | Content |
|---|---|---|
| A value is 1 | 11001100 | Indicates that a station on a link corresponding to B0B1B4B5 has buffered traffic to be received, and optionally a station on a link corresponding to B2B3B6B7 has no buffered traffic to be received |
| A value is 0 | 11001100 | Indicates that a station on a link corresponding to B0B1B4B5 has no buffered traffic to be received, and optionally a station on a link corresponding to B2B3B6B7 has buffered traffic to be received |

Correspondingly, the first device, for example, the multi-link STA, receives the MAC frame, and determines, based on the MAC frame, which stations have buffered traffic to be received. For example, one station in the multi-link STA wakes up to receive the MAC frame in S202, so that not all stations need to wake up. This can reduce power consumption to some extent. The first device may be a multi-link device.

Optionally, after step S202, the method further includes S203: The second device receives a notification frame sent by the first device, where the notification frame indicates that a station that has buffered traffic to be received is in an awake state.

Certainly, there are a plurality of methods for implementing the notification frame, and the methods include but are not limited to the following several methods:
Manner 1: After receiving the MAC frame, the first device may enable all stations having buffered traffic to be received to be in an awake state. A PS-Poll frame defined in 802.11ax is used, and a station having buffered traffic to be received in the first device allocates and sends the PS-Poll frame to the second device, to notify that the station is in an awake state.
Manner 2: After the first device receives the MAC frame, the solution in Embodiment 1 may be used. One station in the first device sends a notification frame on one link, to notify the second device that a plurality of stations, in the first device, having buffered traffic to be received are in an awake state. In the manner 2, the plurality of stations in the first device may wake up to receive the buffered traffic only after sending the notification frame. This can further reduce power consumption and reduce signaling overheads.

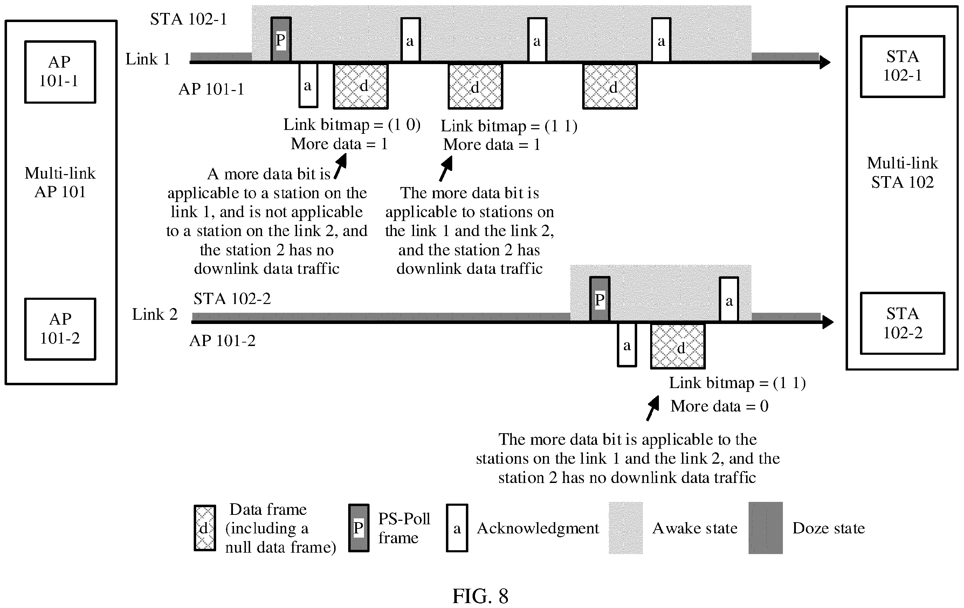

FIG. 8 shows an example of communication between a multi-link AP 101 and a multi-link STA 102. For example, as shown in FIG. 8, the multi-link AP 101 includes two APs. An AP 101-1 operates on a link 1 (link 1) and an AP 101-2 operates on a link 2 (link 2). Similarly, the multi-link STA device includes two STAs. A STA 102-1 operates on the link 1 and a STA 102-2 operates on the link 2. In an initial phase, the two STAs in the multi-link STA each are in a doze state. The STA 102-1 in the multi-link station receives a beacon frame and finds that the STA 102-1 has downlink data. The STA 102-1 sends a PS-Poll frame to notify the multi-link AP 101 that the STA 102-1 is in an awake state. In this case, the AP 101-1 sends an acknowledgment frame or directly sends downlink data to the station 102-1.

A first data packet (certainly, may also be another MAC frame) sent by the AP 101-1 carries a link identifier bitmap field (for example, the link identifier bitmap field includes 2 bits, denoted as B0B1). If a value of B0B1 is 10, and a value of a more data bit is 1, it indicates that the multi-link AP 101 further has data for the STA 102-1 operating on the link 1, and optionally has no data for the STA 102-2 operating on the link 2. Therefore, the STA 102-2 continues to be in a doze state and does not need to wake up. This can reduce power consumption.

A second data packet sent by the AP 101-1 carries a link identifier bitmap field (including 2 bits, denoted as B0B1). If a value of B0B1 is 11, and a value of a more data bit is 1, it indicates that the multi-link AP 101 further has data for the STA 102-1 operating on the link 1, and optionally it further indicates that the multi-link AP further has data for the STA 102-2 operating on the link 2. Then, the STA 102-2 may wake up to receive data sent by the multi-link AP 101. The STA 102-2 in the multi-link station sends a PS-Poll frame to notify the multi-link AP 101 device that the STA 102-2 is in an awake state. Certainly, the station 102-1 may alternatively send a notification frame to notify that the multi-link AP station 102-2 is in an awake state (for a specific implementation method thereof, refer to the implementation of Embodiment 1). Certainly, the more data bit may also be applied only to a link on which a data packet is located. For example, the link identifier bitmap field in the second data packet sent by the AP 101 -1 includes 2 bits. If a value of B0B1 is 11, and a value of the more data bit is 1, it indicates that the multi-link AP has data for the STA 102-1 operating on the link 1, but it does not indicate whether the multi-link AP has data for the STA 102-2 operating on the link 2.

A first data packet sent by the AP 101-2 carries a link identifier bitmap field (including 2 bits, denoted as B0B1). If a value of B0B1 is 11, and a value of a more data bit is 0, it indicates that the multi-link AP device has no data for the STA 102-2 operating on the link 2, and optionally it may further indicate that the multi-link AP device has no data for the STA 102-1 operating on the link 1. Then, the STA 102-1 and the STA 102-2 in the multi-link STA device change to a doze state.

Optionally, the MAC frame may further include other information, for example, an end of service period (end of service period, EOSP) bit and/or a power save management (power save management, PM) bit. Optionally, the EOSP bit is carried in a quality of service QoS (quality of service, QoS) control field in a MAC header of the MAC frame, and the PM bit is carried in a frame control field in the MAC header.

In an example, a combination of the link identifier bitmap and the EOSP bit indicates whether an existing service time of a station on a link corresponding to the link identifier bitmap ends. For example, an n^{th} bit of the link identifier bitmap corresponds to a link n. If the n^{th} bit is set to a first value, for example, 1, the EOSP bit includes one bit, and a value of the one bit is applicable to a station operating on an n^{th} link in the multi-link station receiving the frame. Optionally, if an n^{th} bit of the link identifier bitmap is set to a second value, for example, 0, a value of the EOSP bit is applicable to another station operating on an n^{th} link in the multi-link station receiving the frame. For example, if the EOSP bit is set to 1/0, a receive end (the multi-link STA) is notified that an existing service time of a station on a link corresponding to a bit with a value of 1 in the link identifier bitmap ends/does not end. Optionally, if the EOSP bit is set to 1/0, it indicates that an existing service time of a station on a link corresponding to a bit with a value of 0 in the link identifier bitmap does not end/ends.

In another example, a combination of the link identifier bitmap and the PM bit indicates whether a station on a link corresponding to the link identifier bitmap is in a power saving mode. For example, an n^{th} bit of the link identifier bitmap corresponds to a link n. If the n^{th} bit is set to a first value, for example, 1, the PM bit includes one bit, and a value of the one bit is applicable to a station operating on an n^{th} link in the multi-link station receiving the frame. Optionally, if an n^{th} bit of the link identifier bitmap is set to a second value, for example, 0, a value of the PM bit is applicable to another station operating on an n^{th} link in the multi-link station receiving the frame. For example, if the PM bit is set to 1/0, it indicates that a station on a link corresponding to a bit with a value of 1 in the link identifier bitmap is/is not in a power saving mode. Optionally, if the PM bit is set to 1/0, it indicates that a station on a link corresponding to a bit with a value of 0 in the link identifier bitmap is/is not in a power saving mode.

Certainly, optionally the MAC frame may include the link identifier bitmap and one or more of three types of bits of the more data bit, the EOSP bit, and the PM bit. In other words, the MAC frame may also include one or more of the more data bit combined with the link identifier bitmap, the EOSP bit combined with the link identifier bitmap, and the PM bit combined with the link identifier bitmap. Three mechanisms of the more data bit combined with the link identifier bitmap, the EOSP bit combined with the link identifier bitmap, and the PM bit combined with the link identifier bitmap may be applied to a frame sent by the multi-link AP device to the multi-link station device, or may be applied to a frame sent by the multi-link station device to the multi-link AP device, or may be applied to a frame sent by one multi-link device to another multi-link device.

In another implementation, the MAC frame may not include the link identifier bitmap. The link identifier bitmap is not carried in every data frame. In an example, the data frame does not include the link identifier bitmap. For example, the more data bit notifies the first device (for example, the multi-link STA device) of whether a currently sending station has downlink traffic (or referred to as buffered traffic), the EOSP bit indicates whether service time of the currently sending second device for a currently receiving station ends, and the PM bit indicates whether the currently sending station is in a power saving mode. It may be understood that, in this case in which no link identifier bitmap is included, the MAC frame may include one or a combination of the more data bit, the PM bit, or the EOSP bit.

In addition to the foregoing solutions in which the more data bit combined with the link identifier bitmap field, the link identifier bitmap combined with the EOSP (end of service period) bit, and the link identifier bitmap combined with the PM (power save management) bit, this embodiment of this application further provides a solution in which the MAC frame carries one or more of downlink traffic bitmap, a PM bitmap, and an EOSP bitmap.

In other words, the MAC frame related in steps S201 and S202 may not include the link identifier bitmap field, but includes one or more of the downlink traffic bitmap, the PM bitmap, and the EOSP bitmap. The downlink traffic bitmap notifies whether a plurality of stations in the multi-link STA have buffered traffic to be received. The EOSP bitmap notifies whether service time of the plurality of stations in the multi-link STA ends. The PM bitmap notifies whether the plurality of stations in the multi-link STA are in a power saving mode. Optionally, in any one of the foregoing bitmaps, one bit may correspond to a station operating on one link in the multi-link device. The downlink traffic bitmap is used as an example. The multi-link AP device sends a data frame, and adds a downlink traffic bitmap field to a MAC header of the data frame, to notify which stations, in the multi-link STA device, have downlink traffic to be received. For example, in a communication process between the multi-link AP and the multi-link station shown in FIG. 8, if a downlink data traffic bitmap field carried in a data packet sent by the AP 101-1 of the multi-link AP to the STA 102-1 of the multi-link station includes 2 bits (B0B1), where B0B1 = 01, it indicates that the station 102-1 in the multi-link station receives no downlink traffic, and the station 102-2 receives downlink traffic. Similarly, if a data packet 1 sent by the AP 101-1 in the multi-link AP carries the PM bitmap, and the EOSP bitmap includes two bits whose value is 10, it indicates that service time of the currently sending second device for the STA 102-1 that operates on the link 1 in the multi-link station ends, and service time of the currently sending second device for the STA 102-2 that operates on the link 2 in the multi-link station does not end. If the PM bitmap includes two bits whose value is 10, it indicates that the STA 102-1 operates on the link 1 in the multi-link station is in a power saving mode, and the STA 102-2 operates on the link 2 in the multi-link station is not in a power saving mode.

Based on the downlink traffic bitmap, the multi-link STA may determine which stations have buffered traffic to be received. This can reduce signaling overheads of the multi-link STA.

To differently indicate whether a station has downlink multicast (or broadcast) traffic and unicast traffic, optionally the downlink traffic bitmap field may also separately indicate the downlink multicast traffic and the unicast traffic. In an example, the downlink traffic bitmap field includes a downlink multicast traffic bitmap field and a downlink unicast traffic bitmap field. The downlink multicast bitmap field indicates whether a plurality of stations in the multi-link device have downlink multicast or broadcast traffic. The multicast or broadcast traffic is generally sent after an AP sends a DTIM beacon frame. The downlink unicast bitmap field indicates whether the plurality of stations in the first multi-link device have downlink unicast traffic. In still another example, in the downlink traffic bitmap field, every two bits are used as a unit, and correspond to a station on one link, to indicate whether there is downlink multicast traffic and unicast traffic of the station on the link. One of the two bits corresponds to the unicast traffic, and the other bit corresponds to the multicast or broadcast traffic.

Optionally, one or more of these bitmap fields may be carried in a MAC header of the MAC frame, for example, an HT control field (high throughput, high throughput), which may also be referred to as an aggregated control field (Aggregated control field).

In this embodiment of this application, it is proposed that the link identifier bitmap field combined with the more existing data bit field or the downlink traffic bitmap field carried in the data frame is used to notify whether the plurality of stations in the multi-link station have downlink traffic, so that each station in the multi-link station from does not periodically wake up to receive the beacon frame sent by the AP. This can save power. Further, the data frame sent by the AP may further carry information such as the PM bitmap and the EOSP bitmap. One station in the multi-link station can obtain information about stations on all links after waking up. This can further reduce power consumption, improve transmission efficiency, and reduce a transmission delay.

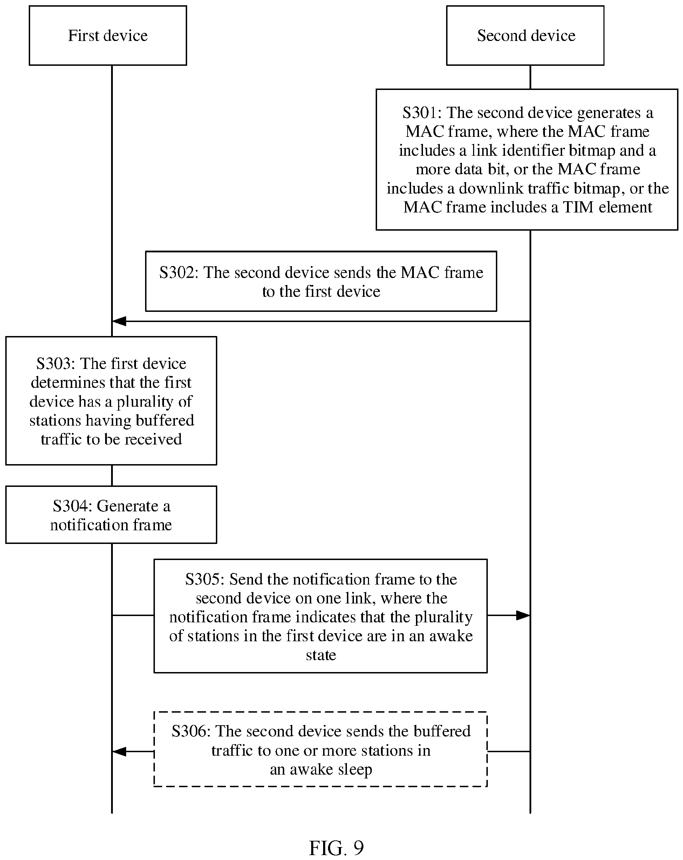

Embodiment 3 provides still another power saving method for multi-link communication, and is applied in a multi-link device. FIG. 9 is a schematic diagram of interaction of still another power saving method according to Embodiment 3. The method includes the following steps.

S301: A second device generates a MAC frame, where the MAC frame includes a link identifier bitmap and a more data bit, or the MAC frame includes downlink traffic bitmap, or the MAC frame includes a TIM element.

A combination of the link identifier bitmap and the more data bit included in the MAC frame indicates whether a station on a link corresponding to the link identifier bitmap has buffered traffic to be received. The downlink traffic bitmap indicates which stations in a first device have downlink traffic to be received. The TIM element notifies which stations in the first device have downlink traffic to be received.

It should be noted that, for a manner of implementing the indication through the combination of the link identifier bitmap and the more data bit and an implementation of implementing the indication by using the downlink traffic bitmap, refer to the description in Embodiment 2. Details are not described herein again. The MAC frame includes a TIM element. For a manner of implementing the indication by using the TIM element, refer to the description in Embodiment 1. Details are not described herein again.

S302: The second device sends the MAC frame to the first device.

Refer to step S202 in Embodiment 2, and details are not described herein again.

S303: The first device determines that the first device has a plurality of stations having buffered traffic to be received.

Refer to step S104 in Embodiment 1. For example, the first device may determine, based on the link identifier bitmap and the more data bit, the downlink traffic bitmap, or the TIM element that are included in the MAC frame, which stations in the first device have buffered traffic.

S304: The first device generates a notification frame.

Refer to step S101 in Embodiment 1, and details are not described herein again.

S305: The first device sends the notification frame on one link, where the notification frame indicates that the plurality of stations in the first multi-link device are in an awake state.

Refer to step S102 in Embodiment 1, and details are not described herein again

Optionally, in S306, the second device sends the buffered traffic to the first device.

Refer to step S105 in Embodiment 1, and details are not described herein again.

In this embodiment of this application, the link identifier bitmap field and the existing more data bit field may indicate whether the plurality of stations in the multi-link station device have downlink traffic, so that each station in the multi-link station device from does not periodically wake up to receive a beacon frame sent by an AP. This can save power. Further, that the plurality of stations in the first multi-link device are in an awake state is fed back. This can reduce signaling overheads and save power.

The following describes in detail apparatuses provided in embodiments of this application, to save power in link communication.

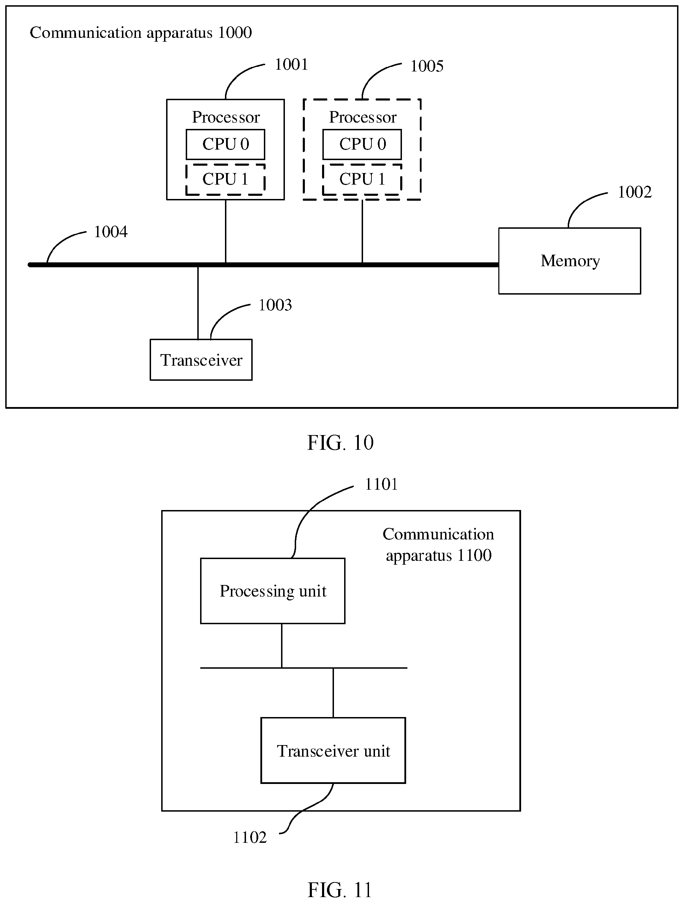

FIG. 10 shows a communication apparatus 1000 according to an embodiment of this application. The apparatus may be the first device (the first multi-link device) or the second device in the foregoing embodiments, or may be a chip or a processing system in the first multi-link device or the second device, and may implement the method and the function in any one of the foregoing embodiments. Due to a difference in integration degrees, the communication apparatus may include one or more of components shown in FIG. 10. The components shown in FIG. 10 may include at least one processor 1001, a memory 1002, a transceiver 1003, and a communication bus 1004.

The following specifically describes the components of the communication apparatus 400 with reference to FIG. 10.

The processor 1001 is a control center of the communication apparatus 1000, and may be one processor or may be a collective term of a plurality of processing elements. For example, the processor 1001 is a central processing unit (central processing unit, CPU), an application-specific integrated circuit (Application Specific Integrated Circuit, ASIC), or one or more integrated circuits configured to implement this embodiment of this application, for example, one or more microprocessors (digital processor signal, DSP), or one or more field programmable gate arrays (Field Programmable Gate Array, FPGA). The processor 1001 may perform various functions of a communication device by running or executing a software program stored in the memory 1002 and invoking data stored in the memory 1002. During specific implementation, in an embodiment, the processor 1001 may include one or more CPUs, for example, a CPU 0 and a CPU 1 in FIG. 10.

During specific implementation, in an embodiment, the communication apparatus 1000 may include a plurality of processors, such as the processor 1001 and a processor 1005 in FIG. 10. Each of the processors may be a single-core processor (single-CPU) or may be a multi-core processor (multi-CPU). The processor herein may be one or more communication devices, circuits, and/or processing cores configured to process data (for example, computer program instructions).

The memory 1002 may be a read-only memory (read-only memory, ROM) or another type of static storage communication device that can store static information and instructions, or a random access memory (random access memory, RAM) or another type of dynamic storage communication device that can store information and instructions. The memory 1002 may alternatively be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can carry or store expected program code in a form of an instruction or a data structure and that is accessible by a computer. However, the memory 1002 is not limited thereto. The memory 1002 may exist independently, and is connected to the processor 1001 by using the communication bus 10010. Alternatively, the memory 1002 may be integrated with the processor 1001. The memory 1002 is configured to store a software program for performing the solutions of this application, and the processor 1001 controls the execution.

The transceiver 1003 is configured to communicate with another device (for example, a second device). Certainly, the transceiver 1003 may further be configured to communicate with a communication network, for example, the Ethernet, a radio access network (radio access network, RAN), or a wireless local area network (Wireless Local Area Networks, WLAN). The transceiver 1003 may include a receiving unit for implementing a receiving function, and a sending unit for implementing a sending function.

The communication bus 10010 may be an industry standard architecture (Industry Standard Architecture, ISA) bus, a peripheral component interconnect (Peripheral Component interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

In an example, the communication apparatus 1000 is an entire device. The communication apparatus may include a processor 1001, a memory 1002, a transceiver 1003, and a communication bus 1004. Optionally, the communication apparatus may further include another component, for example, a display. Optionally, the communication apparatus 1000 is a first multi-link device or a first device, and may be configured to implement the methods and the functions related to the first multi-link device or the first device in Embodiment 1 to Embodiment 3. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to perform step S104, S101, S303, S304, or the like, and the transceiver is configured to perform step S102, S103, S105, S202, S203, S302, S305, S306, or the like. Optionally, the communication apparatus 1000 is a second device, and may be configured to implement the methods and the functions related to the second device in Embodiment 1 to Embodiment 3. For example, the memory stores instructions, and when the processor invokes the instructions, the foregoing methods and functions are implemented. For example, the processor is configured to generate signaling or a frame, and the transceiver is configured to send the signaling or the frame. For example, the processor is configured to generate the MAC framereceived in S103, and is configured to perform S201, S301, or the like. The transceiver is configured to perform step S103, S102, S105, S202, S203, S302, S305, S306, or the like.

In another example, the communication apparatus 1000 is a chip system or a processing system in the first device, the first multi-link device, or the second device, to enable a device installed with the chip system or the processing system to implement the methods and the functions in Embodiment 1 to Embodiment 3. In this case, the communication apparatus 1000 may include some components shown in FIG. 10. For example, the communication apparatus 1000 includes a processor. The processor may be coupled to a memory, invoke instructions in the memory, and execute the instructions, to enable a device configured or installed with the chip system or the processing system to implement the methods and the functions in Embodiment 1 to Embodiment 3. Optionally, the memory may be a component in the chip system or the processing system, or may be a component outside the chip system or the processing system in a coupling link to the chip system or the processing system. In an example, the chip system or the processing system is installed in the first device or the first multi-link device, to enable the first device or the first multi-link device to implement the corresponding methods and functions in the foregoing embodiments. In still another example, the chip system or the processing system is installed in the second device, to enable the second device to implement the corresponding methods and functions in the foregoing embodiments.

The chip system or processing system may support communication based on 802.11 series protocols, for example, 802.11be, 802.11ax, and 802.11ac. The chip system may be installed in various devices supporting WLAN transmission scenarios. The devices in the WLAN transmission scenarios have been described at the beginning of this specification. Details are not described herein again.

In the embodiments of this application, the first device (the first multi-link device) or the second device may be divided into functional modules based on the foregoing method embodiments. For example, the functional modules may be obtained through division based on corresponding functions, or two or more functions may be integrated into one processing module. The integrated module may be implemented in a form of hardware, or may be implemented in a form of a software function module. It should be noted that in embodiments of this application, division into the modules is an example and is merely logical function division, and may be other division in an actual implementation.

When an integrated unit is used, FIG. 11 is a possible schematic structural diagram of a communication apparatus 1100. The communication apparatus 1100 may be a link device, or a chip or a processing system in a multi-link device. The communication apparatus 1100 may perform the operations of the multi-link device in the foregoing method embodiments. The communication apparatus 1100 includes a processing unit 1101 and a transceiver unit 1102.

In an example, the communication apparatus 1100 is a first multi-link device or a station in the first multi-link device.

The processing unit 1101 may be configured to control and manage an action of the communication apparatus 1100, for example, determine that there is a station having buffered traffic in the first multi-link device; and for another example, control an operation of the transceiver unit 1102. Optionally, if the communication apparatus 1100 includes a storage unit, the processing unit 1101 may further execute a program or instructions stored in the storage unit, to enable the communication apparatus 1100 to implement the methods and the functions in any one of the foregoing embodiments.

For example, the processing unit 1101 may be configured to perform, for example, step S101 in FIG. 4, or step S303 or S304 in FIG. 9, and/or another process of the technology described in this specification. All related content of the steps in the foregoing method embodiments may be cited in function descriptions of corresponding function modules. Details are not described herein again.

For example, the transceiver unit 1102 may receive or send data or signaling transmitted on one link, or may receive or send data or signaling transmitted on a plurality of links. Optionally, the transceiver unit 1102 may be one transceiver module, or may include a plurality of transceiver modules. When the transceiver unit 1102 is one transceiver module, the transceiver module may receive or send data on a plurality of links. For example, if the first multi-link device operates on two links, when the transceiver unit 1102 includes two transceiver modules, one transceiver module operates on one link, and the other transceiver module operates on the other link. For example, the transceiver unit 1102 may be configured to perform, for example, step S103, S102, or S105 in FIG. 4, step S202 or S203 in FIG. 7, or step S302, S305, or S306 in FIG. 9, and/or another process of the technology described in this specification. All related content of the steps in the foregoing method embodiments may be cited in function descriptions of corresponding function modules. Details are not described herein again.

For example, the communication apparatus 1100 may be the communication apparatus shown in FIG. 10, the processing unit 1101 may be the processor 1001 in FIG. 10, and the transceiver unit 1102 may be the transceiver 1003 in FIG. 10. Optionally, the communication apparatus 1100 may further include a memory. The memory is configured to store corresponding program code and data for the communication apparatus 1100 to perform any communication method between multi-link devices provided above. Descriptions of all related content of the components in FIG. 10 may be cited in function descriptions of corresponding components of the communication apparatus 1100. Details are not described herein again.

For example, the communication apparatus 1100 may alternatively be a chip or a processor, the processing unit 1102 is a processing circuit in the chip or the processor, the transceiver unit 1102 may be an input/output circuit in the chip or the processor, the input/output circuit is an interface for mutual communication or data exchange between the chip or the processor and another coupled component. It can be ensured that signaling or data information or program instructions are input to the chip or the processor for processing, the processed data or signaling is output to the another coupled component, and the first multi-link device installed with the chip or the processor is controlled to implement a function.

In another example, the communication apparatus 1100 is a second device or a chip in the second device.

For example, the processing unit 1101 may be configured to generate a MAC frame, for example, perform step S201 in FIG. 7, or step S301 in FIG. 9, and/or another process of the technology described in this specification. All related content of the steps in the foregoing method embodiments may be cited in function descriptions of corresponding function modules. Details are not described herein again.

For example, the transceiver unit 1102 may receive or send data or signaling transmitted on one link, or may receive or send data or signaling transmitted on a plurality of links. Optionally, the transceiver unit 1102 may be one transceiver module, or may include a plurality of transceiver modules. When the transceiver unit 1102 is one transceiver module, the transceiver module may receive or send data on a plurality of links. For example, if the second device operates on two links, when the transceiver unit 1102 includes two transceiver modules, one transceiver module operates on one link, and the other transceiver module operates on the other link. For example, the transceiver unit 1102 may be configured to perform, for example, step S103, S102, or S105 in FIG. 4, step S202 or S203 in FIG. 7, or step S302, S305, or S306 in FIG. 9, and/or another process of the technology described in this specification. All related content of the steps in the foregoing method embodiments may be cited in function descriptions of corresponding function modules. Details are not described herein again.

For example, the communication apparatus 1100 may be the communication apparatus shown in FIG. 10, the processing unit 1101 may be the processor 1001 in FIG. 10, and the transceiver unit 1102 may be the transceiver 1003 in FIG. 10. Optionally, the communication apparatus 1100 may further include a memory. The memory is configured to store corresponding program code and data for the communication apparatus 1100 to perform any method provided above. Descriptions of all related content of the components in FIG. 10 may be cited in function descriptions of corresponding components of the communication apparatus 1100. Details are not described herein again.

For example, the communication apparatus 1100 may alternatively be a chip or a processor, the processing unit 1102 is a processing circuit in the chip or the processor, the transceiver unit 1102 may be an input/output circuit in the chip or the processor, the input/output circuit is an interface for mutual communication or data exchange between the chip or the processor and another coupled component. It can be ensured that signaling or data information or program instructions are input to the chip or the processor for processing, the processed data or signaling is output to the another coupled component, and a device installed with the chip or the processor is controlled to implement a function.

An embodiment of this application further provides a computer-readable storage medium. The computer-readable storage medium stores computer program code. When the foregoing processor executes the computer program code, an electronic device performs the method in any embodiment in FIG. 4, FIG. 7, and FIG. 9.

An embodiment of this application further provides a computer program product. When the computer program product runs on a computer, the computer is enabled to perform the method in any embodiment in FIG. 4, FIG. 7, and FIG. 9.

An embodiment of this application further provides a communication apparatus. The apparatus may exist in a product form of a chip. A structure of the apparatus includes a processor and an interface circuit. The processor is configured to communicate with another apparatus through a receiving circuit, to enable the apparatus to perform the method in any embodiment in FIG. 4, FIG. 7, and FIG. 9.

An embodiment of this application further provides a communication system, including a first device and a second device. The first device and the second device may perform the method in any embodiment in FIG. 4, FIG. 7, and FIG. 9.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, to enable the processor to read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by using hardware, software, firmware, or any combination thereof. When the functions are implemented by using the software, the foregoing functions may be stored in a computer-readable medium or transmitted as one or more instructions or code in the computer-readable medium. The computer-readable medium includes a computer-readable storage medium and a communication medium. The communication medium includes any medium that facilitates transmission of a computer program from one place to another. The storage medium may be any available medium accessible to a general-purpose or a special-purpose computer.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement, or improvement made based on the technical solutions of this application shall fall within the protection scope of this application.

## Claims

1. A communication apparatus for multi-link communication, applied in a first multi-link device, comprising:
a processing unit, configured to generate a notification frame, wherein the notification frame indicates whether a plurality of stations in the first multi-link device are in an awake state, and one station in the first multi-link device operates on one link; and
a transceiver unit, configured to send the notification frame to a second device on one link.

2. A communication apparatus for multi-link communication, applied in a second device, comprising:
a transceiver unit, configured to receive, on one link, a notification frame from a station in a first multi-link device, wherein the notification frame indicates whether a plurality of stations in the first multi-link device are in an awake state, and one station in the first multi-link device operates on one link; and
a processing unit, configured to determine a station in an awake state in the first multi-link device based on the notification frame.

3. The communication apparatus according to claim 1, wherein
the transceiver unit is further configured to receive a MAC frame from the second device, and the MAC frame indicates that the plurality of stations in the first multi-link device have buffered traffic to be received.

4. The communication apparatus according to claim 2, wherein
the transceiver unit is further configured to send a MAC frame to the first multi-link device, and the MAC frame indicates that the plurality of stations in the first multi-link device have buffered traffic to be received.

5. The communication apparatus according to any one of claims 1 to 4, wherein the notification frame comprises a duration/ID field, and the duration/ID field indicates whether the plurality of stations in the first multi-link device are in an awake state.

6. The communication apparatus according to claim 5, wherein the duration/ID field comprises 16 bits, and all or some of the last 14 bits of the 16 bits indicate whether the plurality of stations in the first multi-link device are in an awake state.

7. The communication apparatus according to claim 6, wherein
the all or some of the last 14 bits comprise a link identifier bitmap, the link identifier bitmap comprises a plurality of bits, and one bit corresponds to one station on one of a plurality of links and indicates whether one station, in the first multi-link device, that operates on a corresponding link is in an awake state; or
the all or some of the last 14 bits comprise a link identifier number field, the link identifier number field comprises link information indicating a link, and the link identifier number field indicates that a station on a link indicated by the link information is in an awake state; or
the all or some of the last 14 bits comprise a control field and a station status indication field, wherein the control field comprises indication information indicating whether the station status indication field comprises the link identifier bitmap or the link identifier number field.

8. The communication apparatus according to claim 6, wherein the last 14 bits comprise a start AID field and an AID bitmap field, the start AID field carries one start AID, and the AID bitmap field indicates whether a station corresponding to a sequential link identifier greater or less than a link identifier corresponding to the start AID is in an awake state.

9. The communication apparatus according to claim 7 or 8, wherein a value of the first two bits of the duration/ID field is 10.

10. The communication apparatus according to claim 6, wherein the all or some of the last 14 bits comprise a special AID value, and the special AID value indicates that all stations in the first multi-link device are in an awake state; or
the special AID value indicates that a station, in the first multi-link device, that has buffered traffic to be received is in an awake state.

11. The communication apparatus according to claim 10, wherein a value of the first two bits of the duration/ID field is 11.

12. The communication apparatus according to any one of claims 1 to 4, wherein the notification frame comprises an aggregated frame of a plurality of PS-Poll frames, one PS-Poll frame comprises a duration/ID field, and the duration/ID field carries an association identifier AID indicating that a station corresponding to the AID in the first multi-link device is in an awake state.

13. The communication apparatus according to any one of claims 1 to 11, wherein the notification frame is a PS-Poll frame.

14. The communication apparatus according to any one of claims 3 to 13, wherein
the MAC frame comprises a link identifier bitmap and a more data (More data) bit, and a combination of the link identifier bitmap and the more data bit indicates whether a station on a link corresponding to the link identifier bitmap has buffered traffic to be received; or
the MAC frame comprises downlink traffic bitmap field, and the downlink traffic bitmap field indicates whether the plurality of stations in the first multi-link device have buffered traffic to be received.

15. The communication apparatus according to claim 14, wherein the downlink traffic bitmap field comprises a downlink multicast traffic bitmap field and a downlink unicast traffic bitmap field, the downlink multicast bitmap field indicates whether the plurality of stations in the first multi-link device have downlink multicast or broadcast traffic, and the downlink unicast bitmap field indicates whether the plurality of stations in the first multi-link device have downlink unicast traffic.

16. A power saving method for multi-link communication, comprising:
generating, by one station in a first multi-link device, a notification frame, wherein the notification frame indicates whether a plurality of stations in the first multi-link device are in an awake state, and one station in the first multi-link device operates on one link; and
sending, by one station in the first multi-link device, the notification frame to a second device on one link.

17. A power saving method for multi-link communication, comprising:
receiving, by a second device on one link, a notification frame from a station in a first multi-link device, wherein the notification frame indicates whether a plurality of stations in the first multi-link device are in an awake state, and one station in the first multi-link device operates on one link; and
determining, by the second device, a station in an awake state in the first multi-link device based on the notification frame.

18. The method according to claim 16, wherein before the generating a notification frame, the method further comprises:
receiving a MAC frame from the second device, wherein the MAC frame indicates that the plurality of stations in the first multi-link device have buffered traffic to be received.

19. The method according to claim 17, wherein the method further comprises:
sending a MAC frame to the first multi-link device, wherein the MAC frame indicates that the plurality of stations in the first multi-link device have buffered traffic to be received.

20. The method according to any one of claims 16 to 19, wherein the notification frame comprises a duration/ID field, and the duration/ID field indicates whether the plurality of stations in the first multi-link device are in an awake state.

21. The method according to claim 20, wherein the duration/ID field comprises 16 bits, and all or some of the last 14 bits of the 16 bits indicate whether the plurality of stations in the first multi-link device are in an awake state.

22. The method according to claim 21, wherein
the all or some of the last 14 bits comprise a link identifier bitmap, the link identifier bitmap comprises a plurality of bits, and one bit corresponds to one station on one of a plurality of links and indicates whether one station, in the first multi-link device, that operates on a corresponding link is in an awake state; or
the all or some of the last 14 bits comprise a link identifier number field, the link identifier number field comprises link information indicating a link, and the link identifier number field indicates that a station on a link indicated by the link information is in an awake state; or
the all or some of the last 14 bits comprise a control field and a station status indication field, wherein the control field comprises indication information indicating whether the station status indication field comprises the link identifier bitmap or the link identifier number field.

23. The method according to claim 21, wherein the last 14 bits comprise a start AID field and an AID bitmap field, the start AID field carries one start AID, and the AID bitmap field indicates whether a station corresponding to a sequential link identifier greater or less than a link identifier corresponding to the start AID is in an awake state.

24. The method according to claim 22 or 23, wherein a value of the first two bits of the duration/ID field is 10.

25. The method according to claim 21, wherein the all or some of the last 14 bits comprise a special AID value, and the special AID value indicates that all stations in the first multi-link device are in an awake state; or
the special AID value indicates that a station, in the first multi-link device, that has buffered traffic to be received is in an awake state.

26. The method according to claim 25, wherein a value of the first two bits of the duration/ID field is 11.

27. The method according to any one of claims 16 to 19, wherein the notification frame comprises an aggregated frame of a plurality of PS-Poll frames, one PS-Poll frame comprises a duration/ID field, and the duration/ID field carries an association identifier AID indicating that a station corresponding to the AID in the first multi-link device is in an awake state.

28. The method according to any one of claims 16 to 26, wherein the notification frame is a PS-Poll frame.

29. The method according to any one of claims 18 to 28, wherein
the MAC frame comprises a link identifier bitmap and a more data (More data) bit, and a combination of the link identifier bitmap and the more data bit indicates whether a station on a link corresponding to the link identifier bitmap has buffered traffic to be received; or
the MAC frame comprises downlink traffic bitmap field, and the downlink traffic bitmap field indicates whether the plurality of stations in the first multi-link device have buffered traffic to be received.

30. The method according to claim 29, wherein the downlink traffic bitmap field comprises a downlink multicast traffic bitmap field and a downlink unicast traffic bitmap field, the downlink multicast bitmap field indicates whether the plurality of stations in the first multi-link device have downlink multicast or broadcast traffic, and the downlink unicast bitmap field indicates whether the plurality of stations in the first multi-link device have downlink unicast traffic.

31. A buffered traffic notification method, wherein the method comprises:
receiving, by a first device, a media access control MAC frame, wherein the MAC frame comprises a link identifier bitmap and a more data bit, the link identifier bitmap comprises a plurality of bits, one bit corresponds to one station on one of a plurality of links, the more data bit comprises one bit, and a combination of the link identifier bitmap and the more data bit indicates whether a station on a link corresponding to the link identifier bitmap has buffered traffic to be received; and determining, by the first device based on the link identifier bitmap and the more data bit, which stations in the first device have buffered traffic to be received.

32. A buffered traffic notification method, wherein the method comprises:
generating, by a second device, a media access control MAC frame, wherein the MAC frame comprises a link identifier bitmap and a more data bit, the link identifier bitmap comprises a plurality of bits, one bit corresponds to one station on one of a plurality of links, the more data bit comprises one bit, and a combination of the link identifier bitmap and the more data bit indicates whether a station on a link corresponding to the link identifier bitmap has buffered traffic to be received; and sending, by the second device, the MAC frame.

33. A communication apparatus, applied in a first device, comprising:
a transceiver unit, configured to receive a media access control MAC frame, wherein the MAC frame comprises a link identifier bitmap and a more data bit, the link identifier bitmap comprises a plurality of bits, one bit corresponds to one station on one of a plurality of links, the more data bit comprises one bit, and a combination of the link identifier bitmap and the more data bit indicates whether a station on a link corresponding to the link identifier bitmap has buffered traffic to be received; and
a processing unit, configured to determine, based on the link identifier bitmap and the more data bit, which stations in the first device have buffered traffic to be received.

34. A communication apparatus, applied in a second device, comprising:
a processing unit, configured to generate a media access control MAC frame, wherein the MAC frame comprises a link identifier bitmap and a more data bit, the link identifier bitmap comprises a plurality of bits, one bit corresponds to one station on one of a plurality of links, the more data bit comprises one bit, and a combination of the link identifier bitmap and the more data bit indicates whether a station on a link corresponding to the link identifier bitmap has buffered traffic to be received; and
a transceiver unit, configured to send the MAC frame.

35. A communication apparatus, wherein the communication apparatus comprises a processor and a transceiver, the transceiver is configured to receive and send information or is configured to communicate with another network element, and the processor is configured to execute computer instructions to support the communication apparatus to perform the method according to claims 16 to 30 or the method according to claims 31 and 32.

36. A communication apparatus, wherein the communication apparatus comprises a processor and a memory, the memory is configured to be coupled to the processor, and store program instructions and data that are necessary for the communication apparatus, and the processor is configured to execute the program instructions stored in the memory to support the communication apparatus to perform the method according to claims 16 to 30 or the method according to claims 31 and 32.

37. A chip, wherein the chip comprises an input/output interface circuit and a processing circuit, the input/output interface circuit is configured to input and output data or signaling information, and the processing circuit is configured to process the signaling or data information, to enable the chip to perform the method according to claims 16 to 30 or the method according to claims 31 and 32.

38. A computer-readable storage medium, wherein the computer-readable storage medium stores computer program code, and when the computer program code is run on a processor, the processor is enabled to perform the method according to claims 16 to 30 or the method according to claims 31 and 32.

39. A computer program product, wherein the computer program product stores computer software instructions, and the computer software instructions comprise a program used in the method according to claims 16 to 30 or the method according to claims 31 and 32.

40. A communication system, wherein the communication system comprises a first device and a second device, the first device is configured to perform the method according to any one of claims 16, 18, and 20 to 30, and the second device is configured to perform the method according to any one of claims 17, 19, and 20 to 30; or the first device is configured to perform the method according to claim 31, and the second device is configured to perform the method according to claim 32.
